# EUROPÄISCHE PATENTSCHRIFT

(11) **EP 1 456 046 B1**
(45) Veröffentlichungstag und Bekanntmachung des Hinweises auf die Patenterteilung: **09.07.2008**
(21) Anmeldenummer: 02805291.8
(22) Anmeldetag: 26.11.2002
(51) Int. Cl.: B60H 1/32, F25B 5/04, F25B 6/04

(54) **AUFBAU UND REGELUNG EINER KLIMAANLAGE FÜR EIN KRAFTFAHRZEUG**
CONSTRUCTION AND CONTROL OF AN AIR-CONDITIONING SYSTEM FOR A MOTOR VEHICLE
FABRICATION ET REGULATION D'UNE CLIMATISATION DESTINEE A UN VEHICULE

(30) Priorität: 21.12.2001 DE 20121533 U
(43) Veröffentlichungstag der Anmeldung: 15.09.2004
(73) Patentinhaber: Daimler AG, 70327 Stuttgart (DE)
(72) Erfinder: CÄSAR, Roland, 70378 Stuttgart (DE); GÄRTNER, Jan, 70327 Stuttgart (DE); GEIGER, Steffen, 72072 Tübingen (DE); HARM, Klaus, 70597 Stuttgart (DE); WERTENBACH, Jürgen, 70734 Fellbach (DE)
(86) Internationale Anmeldenummer: PCT/EP2002/013279
(87) Internationale Veröffentlichungsnummer: WO 2003/053726

(56) Entgegenhaltungen:
- EP-A- 0 989 003
- US-A- 5 609 036

## Beschreibung

Stand der Technik für das Kühlen, Trocknen, Heizen und Belüften von Fahrzeuginnenräumen sind Klimageräte in Fahrzeugen. Die Kühlung und Trocknung der Luft erfolgt durch Kälteanlagen, zur Heizung wird die Kabinenluft normalerweise in Heizungswärmetauschern, welche die Motorabwärme bereitstellen, erwärmt. Die Belüftung der Kabine erfolgt mittels Aussenluft oder Recirculationsluft aus der Kabine über Luftgebläse. Ferner wird mit dem Klimagerät die Luftverteilung in der Kabine geregelt.

Zur Kühlung / Trocknung und Heizung sind Kälte-Erzeugungsanlagen für das Klimatisieren der Fahrzeugkabinenluft in Fahrzeugen bekannt, bei denen auf der Hochdruckseite eines Dampf-Kompressions-Kreislaufes, der einen Verdichter, einen Gaskühler/Kondensator, einen inneren Wärmetauscher, eine Drosseleinrichtung mit mindestens einem Verdampfer beinhaltet, die in Reihe geschaltet sind und einen integralen, geschlossenen Kreis bilden zum Angebot von Kälteleistung, bzw. Heizleistung eine hinsichtlich des kritischen Druckes im Kreislauf überkritischen Druck erzeugt und gleichzeitig auf der Niederdruckseite des Kreislaufes ein unterkritischer Druck erreicht wird, wobei dem auf der Niederdruckseite abgekühlten Kältemittel über dem Verdampfer Wärmeenergie zugeführt wird, bzw. Kälteenergie abgeführt wird und der Kältemittel-Massenstrom im Kreislauf durch Regulierung desselben im Verdichter geregelt wird (DE 44 322 72 C2). Eine Ausgestaltung der Erfindung bezüglich der Einbindung der Anlage in das Klimagerät eines Fahrzeuges und der verschieden Betriebsmodi Heizen, Kühlen und Trocknen. erfolgt nicht.

In DE 198 13 674 C1 wird eine Kälteanlage mit Wärmepumpenfunktion beschrieben, die über den Kältekreislauf Wärmeleistung auf die Kabinenluft von Fahrzeugen überträgt. Ziel ist hierbei unmittelbar nach der Inbetriebnahme des Fahrzeuges die Wirksamkeit der Heizung zu erhöhen und deren Ansprechzeit zu verkürzen. Dies geschieht durch die Nutzung der Kälteanlage als Wärmepumpe, wobei der Wärmeeintrag in das Kältemittels im Umgebungswärmetauscher mit Außenluft erfolgt und in einem Abgaswärmetauscher mit den Abgasen einer Brennkraftmaschine weiter erwärmt wird. Das Kältemittel wird in folge im Kältemittelverdichter komprimiert, im Innenraumwärmetauscher mit angesaugter kalter Fahrzeuginnenraumluft durchströmt. Somit erwärmt sich die Fahrzeuginnenraumluft im Innenraumwärmetauscher und die Fahrzeugkabine wird beheizt.
Wird die Anlage zum Kühlen und Trocknen der Fahrzeuginnenraumluft genutzt, so kühlt und trocknet der Innenraumwärmetauscher die angesaugte feuchte Fahrzeuginnenraumluft. Somit kühlt sich die Fahrzeuginnenraumluft ab, der in der angesaugten Luft enthaltene Wasserdampf kondensiert und die Fahrzeugkabine wird klimatisiert.

Das Umschalten der Kälteanlage vom Kühlen und Trocknen auf Heizen bezüglich eines möglichen Scheibenbeschlags in der Fahrzeugkabine ist hierin nicht gelöst.

In DE 4318255 A1 ist eine Einrichtung zur Innenraumklimatisierung eines mit Abwärme erzeugenden Antriebes ausgerüsteten Fahrzeuges beschrieben. Diese enthält einen Kältemittelkreislauf und einen Heizmittelkreislauf, die beide nur über zumindest einen ersten Wärmetauscher wärmeübertragend koppelbar sind. Während im Heizmittelkreislauf ein Wärmetauscher zur Erfassung der Abwärme des Antriebes und ein im Wege der zum Innenraum zu transportierenden Luft angeordneter Heizungswärmetauscher liegen, enthält der Kältemittelkreislauf im Wege der Luft einen Verdampfer, einen Umgehungskanal zu diesem und einem Abluftkanal zu diesem und einem Abluftstutzen sowie einem Kältemittelverdichter . Über Umschaltventile lassen sich für den Fall des Kühlbetriebs ein Kondensator und Kühler in die beiden Kreisläufe integrieren; auch ist der Heizungswärmetauscher mittels eines ventilbestückten Bypasses abschaltbar. Hiermit sollen energiesparend verschiedene Klimaaufgaben im Fahrzeug lösbar werden.

Nachteilig an diesen Lösungen ist, daß die Erwärmung der Kabinenluft nicht direkt erfolgt, sondern über einen Heizungswärmetauscher im Wärmeträgerkreislauf als Teil des Motorkühlsystems. Aufgrund der thermischen Massen ergibt sich eine hohe Trägheit der Anlage, was die Dynamik beim Aufheizen vermindert und der Verkehrssicherheit nicht zuträglich ist.

In DE 3907201 C2 ist ein Kraftfahrzeug mit einer heizenden d.h. auch als Wärmepumpe arbeitende Klimaanlage ausgerüstet. Um im Heizbetrieb die Aufnahme von sich möglicherweise im vorangegangenen Kühlbetrieb am Verdampfer niedergeschlagener Feuchtigkeit durch die zu klimatisierende Luft verhindern, werden verschiedene Maßnahmen vorgeschlagen. So wird für den Heizbetrieb ein separater Wärmetauscher vorgesehen, des weiteren kann am Innenraumwärmetauscher ein Feuchtensensor angebracht werden, welcher in Abhängigkeit von der ermittelten Feuchtigkeit entweder den Heizbetrieb unterbindet oder eine stromab des Kühl- Verdampfers vorgesehene Entfeuchtungs- Vorrichtung für die zu klimatisierende Luft aktiviert.

Nachteilig an der einen Lösung ist, daß bei häufig vorkommenden Betriebsbedingungen des Fahrzeuges, wie der vorangegangenen Trocknung der Luft für die Fahrzeugkabine bei Außentemperaturen von z.B. 0°C bis 10°C kein Heizbetrieb möglich ist oder eine nur sehr eingeschränkte Leistung der Anlage entnommen werden kann.
Die andere Lösung vermeidet die wünschenswerte kontinuierliche Lufttrocknung bei der Nutzung der Kälteanlage im Wärmepumpenbetrieb und erfüllt damit nicht die Forderungen an die Beschlagfreihaltung der Scheiben in der Fahrzeugkabine insbesondere im Umluftbetrieb. Entfeuchtungseinrichtungen z.B. auf Basis adsorptiver Materialien verursachen einen Druckabfall im Luftmassenstrom für die Belüftung der Fahrzeugkabine und müssen periodisch desorbiert werden. Um hier Kontinuität zu erreichen, müssen mindestens zwei Entfeuchtungseinrichtungen umschaltbar bereitgestellt werden, welches in Verbindung mit einer elektrischen Heizung und Luftfördereinrichtung und Abströmung zur Desorbtion einen erheblichen technischen Aufwand bedeutet.

In EP 09 898 003 A2 ist ein Kältekreislauf mit Wärmepumpe für eine bevorzugte Anwendung in einen nicht verbrennungsmotorisch betriebene Fahrzeuge beschrieben. Die Anlage enthält ein Klimagerät mit 2 kältemitteldurchströmten Wärmetauschern, einem ersten Kondensator und einem Verdampfer. Im Klimakasten wird der bezüglich der einströmenden Kabinenluft stromabwärts angeordnete Wärmetauscher direkt mit der Hochdruckseite des Verdichters fluidisch verbunden und wird je nach Betriebsfall mit heißen Kältemittel unter hohem Druck durchströmt. Für die benötigte Heizung der Kabine wird der Innenraumluftstrom nur bei Bedarf über diese Komponente geleitet. Im Kühl- und Trocknungsbetrieb strömt das Kältemittel vom Verdichter durch denn ersten Kondensator im Klimakasten, wird anschließend im zweiten Kondensator abgekühlt, in einer Drosseleinrichtung entspannt und verflüssigt und gelangt dann zur Wärmeaufnahme zur Abkühlung der Kabinenluft in den Verdampfer. Sinngemäß wird bei reinem Kühlbetrieb kein Luftstrom über den ersten Kondensator geleitet. Bei Kühlbetrieb mit Wiederaufheizung, wie zur Entfeuchtung notwendig (Reheat Modus), gelangt lediglich ein Teilstrom über diese Komponente. Zur Entfeuchtung strömt das Kältemittel nacheinander durch den ersten Kondensator, durch den zweiten Kondensator , durch die Drosselstelle verflüssigt in den Verdampfer, zum Akkumulator zurück zum Verdichter. Bei allen drei Betriebsmodi: Kühlen , Kühlen und Wiederaufheizen und Heizen wird das gesamte Kältemittel immer zuerst durch den ersten Kondensator, dann durch den zweiten Kondensator, Verdampfer, und über den Akkumulator geleitet, wobei an verschiedenen Drosselstellen unterschiedliche Drücke und Temperaturen sich einstellen lassen und verschiedene Bypassstellen den Kreislauf unterschiedlich gestalten können.

Der zweite Kondensator ist hierbei zwischen dem ersten Wärmetauscher und dem Verdampfer angeordnet und als innerer Wärmetauscher ausgebildet, mittels welchem Wärme zwischen zwei Teilströmen des in dem ersten Kondensator abgekühlten Kältemittels aufeinander übertragbar ist. Einem der zwei Teilströme ist eine weitere Drosseleinrichtung zum Entspannen eines Teils des in dem ersten Kondensator abgekühlten Kältemittels vorgeschaltet. Der entspannte Teilstrom, welcher in dem inneren Wärmetauscher dem nicht entspannten Teilstrom Wärme entziehen kann, ist in den Kältekreislauf mittels einer direkt in den Verdichter mündenden Leitung eingebunden. Mittels der direkt in den Verdichter mündenden Leitung sind der Verdampfer und die dem Verdampfer vorgeschaltete Drosseleinrichtung überbrückbar. Ist die weitere Drosseleinrichtung vollständig geschlossen, so wird im Betrieb des Kältekreislaufs das nicht entspannte Kältemittel der dem Verdampfer vorgeschalteten Drosseleinrichtung ohne vorherige Abkühlung in dem inneren Wärmetauscher zugeführt.

Nachteilig ist, daß in den Klimakasten ständig eine hohe Wärmelast eingebracht wird, der Heizungswärmetauscher hoher Temperatur- und Druckbelastung widerstehen muß, die Verrohrung der Anlage im Fahrzeug komplex und bauraumintensiv ist, sich vermeidbare Druckabfälle mit Effizienzminderung einstellen und eine große Kältemittelfüllung erfordert. Die Anlage erfüllt daher nicht die allgemeingültigen Anforderungen an Komplexität, Kosten, Effizienz, Leistungsfähigkeit und Ökologie.

Der Stand der Technik beschreibt somit Systeme, bei dem der Kälteanlagen-Verdampfer, d.h. der Kältemittel durchströmte Wärmetauscher im Betrieb der Kälteanlage im Kühlbetrieb die in den Fahrzeuginnenraum eintretende Luft abkühlt und trocknet, oder im Betrieb der Kälteanlage im Heizbetrieb die in Fahrzeuginnenraum eintretende Luft aufheizt. Im Kühlbetrieb kondensiert der Wasserdampf der Luft an den kalten Oberflächen des Wärmetauschers. Somit kann im Heizbetrieb das an der Oberfläche des kältemitteldurchströmten Wärmetauschers anhaftende Wasser verdampfen und den in den Fahrzeuginnenraum eintretenden Luftmassenstrom befeuchten. Die kann zu vermehrtem Scheibenbeschlag führen. Aus Gründen der Beschlagfreihaltung wird nach dem Stand der Technik bei Temperaturen von ca. -4°C und 10°C der eintretenden Luftmassenstrom durch die Kälteanlage im Kühlbetrieb abgekühlt und damit getrocknet und danach Im Heizungswärmetauscher auf die benötigte Lufttemperatur im sogenannten 'Reheat Betrieb' erwärmt. Bei Nutzung des kältemitteldurchströmten Wärmetauschers zu Heizen kann die Funktion des Abkühlens und damit des Trocknens nicht gleichzeitig ausgeführt werden.

Mit Blick auf die vorangegangenen Probleme und Unzulänglichkeiten ist das Ziel der vorliegenden Erfindung, eine Anordnung von Komponenten einer Kälteanlage in Fahrzeugen dahingehend umzugestalten und zu erweitern, welche die Heizleistung in Fahrzeugen in allen Betriebszuständen verbessern, welche ein beliebiges Umschalten der Kälteanlage zwischen Heiz- und Kühlbetrieb ohne Scheibenbeschlag ermöglichen.
In einem zweiten Ziel der vorliegenden Erfindung soll die einströmende Kabinenluft auch bei Betrieb der Wärmepumpe und Außentemperaturen weit unterhalb der heutigen getrocknet werden.
In einem dritten Ziel der Erfindung soll die Speicherung von Wärme (z.B. zum Heizen und Kühlen) beim kurzzeitigen Abstellen des Fahrmotors den Insassenkomfort aufrecht halten.

Die Aufgabe wird bezüglich des Innenraumes durch zwei prinzipielle Anordnungen gelöst:
**A**: Eine integrierte Wärmepumpenanlage zum Kühlen und Heizen, welche die Energie direkt in den Luftstrom für die Fahrzeugkabine einbringt. Dies erfolgt mittels kältemitteldurchströmten Wärmetauschern im Klimakasten des Fahrzeugs in dem zum Heizen das Kältemittel abkühlt und gegebenenfalls kondensiert und in dem zum Kühlen das Kältemittel verdampft.
**B:** Eine integrierte Wärmepumpenanlage zum Kühlen und Heizen, welche die Energie indirekt über Wärmeträgerflüssigkeiten in den Luftstrom für die Fahrzeugkabine einbringt. Dies erfolgt mittels Flüssigkeits-/ Luft- Wärmetauscher im Klimakasten des Fahrzeugs in dem zum Heizen des Luftstroms das Sekundär- Kältemittel abkühlt und in dem zum Kühlen des Luftstromes das Sekundär- Kältemittel aufwärmt.

Die Anordnungen können sowohl in der beschriebenen Form als auch in Kombination miteinander ausgeführt sein.

Für beide Anordnungen bestehen für den Wärmepumpenbetrieb jeweils die Optionen als Hauptwärmequelle das Kühlmittel des Fahrzeugantriebes (Fig. 5,7,11,12,14,16) oder die Außenluft (Fig. 6,8,13,15,17,18,20,21,22) zu nutzen. Die sensible und latente Wärme kann als Neben-Wärmequelle zur Funktion der Wärmepumpe beitragen (Fig. 9,10,19).

Mit Bezug auf die vorliegende Erfindung in einem Kältekreislauf strömt im Kühlbetrieb das Kältemittel vom Verdichter über ein Schaltventil über den Kondensator/Gaskühler und gegebenenfalls die Hochdruckseite des Inneren Wärmetauscher zu einem ersten Expansionsventil, in welchem das Kältemittel sich verflüssigt und über den Verdampfer, den Sammler und gegebenenfalls die Niederdruckseite des Inneren Wärmetauschers über ein weiteres Schaltventil in den Kältemittelverdichter. Der Gaskühler führt Wärme an die Umgebung ab. Der Verdampfer befindet sich im Klimakasten. Er kühlt und trocknet die Innenraumluft für die Fahrzeugkabine. Durch den in seinem Fördervolumen regelbaren Verdichter kann der im Kreislauf umlaufende Kältemittelmassenstrom eingestellt werden. Somit kann die gewünschte Verdampfertemperatur eingestellt werden. Beim Betrieb der Kälteanlage zum Kühlen können zwei Betriebsfälle auftreten, Kühlen und Trocknen oder Kühlen/Trocknen und Heizen (Reheat). Bei letzteren erfolgt die Erwärmung der Luft über den Heizungswärmetauscher stromabwärts des Verdampfers.

In der Wärmepumpenschaltung strömt das Kältemittel vom Verdichter umgelenkt durch das Schaltventil durch einen Gaskühler/ Kondensator im Klimakasten, ein erstes Expansionsventil, den Verdampfer, ein zweites Expansionsventil zur Wärmeaufnahme in einen Wärmetauscher und über ein zweites Schaltventil zurück zum Verdichter. Der Kreislauf ist damit geschlossen.
Die Abgabe von Nutzwärme bei der Wärmepumpe erfolgt im Gaskühler/ Kondensator. Dieser kann die Wärme unterschiedlich weiterleiten. Er kann direkt im Klimakasten stromabwärts von Verdampfer und Heizungswärmetauscher angeordnet sein oder in den Heizmittelstrom eingebracht werden und über den Heizungswärmetauscher zur Erwärmung der Innenraumluft für die Kabine herangezogen werden. Der Druck und damit die Temperatur im Kältemittelverdampfer kann mittels des ersten Expansionsventils und des zweiten Expansionsventils variiert werden. Dies ist zum einen für die Aufrechterhaltung der Trocknung essentiell zum anderen kann bei trockener Wärmetauschermatrix der Verdampfer zur Steigerung der Heizleistung der Anlage genutzt werden. Die Aufnahme von Wärme in den Kältekreislauf erfolgt über den Umgebungswärmetauscher bei einer Verdampfungstemperatur unterhalb der Außentemperatur. Anstelle der Wärmequelle Umgebung kann auch mit einem Motorkühlmittel /Kältemittel Wärmetauscher die Motorwärme nutzbar werden. Hier strömt dann das Kältemittel vom Verdichter umgelenkt durch das Schaltventil durch den Wärmepumpenkondensator, ein erstes Expansionsventil durch den Verdampfer über ein zweites Expansionsventil zur Wärmeaufnahme in den Motorkühlmittel /Kältemittel Wärmetauscher und dann gegebenenfalls über ein zweites Schaltventil zurück zum Verdichter. Der Kreislauf ist damit ebenfalls geschlossen.
Beim Betrieb der Wärmepumpe zum Heizen können zwei Betriebsfälle auftreten: Heizen und Trocknen oder Heizen. Im ersten Fall kondensiert/ kühlt das verdichtete Kältemittel im Wärmepumpenkondensator ab. Es gibt dabei seine Wärme direkt an die Kabinenluft ab oder leitet diese indirekt in den Heizmittelstrom vor dem Heizungswärmetauscher ein. Nachfolgend trifft das Kältemittel auf ein regelbares Expansionsventil, in welchem es auf eine Temperatur geregelt wird, die für die Trocknung der Luft ausreichend und soweit möglich komfortabel ist. Danach wird das Kältemittel auf eine Temperatur unterhalb die der Wärmequelle expandiert. Hier nimmt der Kältekreislauf Wärme auf. Beim Betriebsmodi Heizen kondensiert/ kühlt das verdichtete Kältemittel im Wärmepumpenkondensator ab. Es gibt dabei seine Wärme direkt an die Kabinenluft ab oder leitet diese indirekt in den Heizmittelstrom vor dem Heizungswärmetauscher ein. Nachfolgend trifft das Kältemittel auf das vollständig geöffnete erste Expansionsventil, in welchen das Kältemittel nur wenig gedrosselt wird und das Kältemittel weiter abgekühlt werden kann. Die eintretende Kabinenluft wird vorgewärmt. Hierdurch läßt die Heizleistung der Anlage weiter steigern. Danach wird das Kältemittel auf eine Temperatur unterhalb die der Wärmequelle expandiert. Hier nimmt der Kältekreislauf Wärme auf und das Kältemittel gelangt zurück zum Kältemittelverdichter.

Bei Fahrtbeginn ist die integrierte Wärmepumpenanlage im Heizbetrieb für die Fahrzeugheizung ausreichend, eine Fahrzeugheizung durch das Motorkühlmittel erfolgt anfangs nicht.

Erfolgt die Wärmabgabe bei einer integrierten Wärmepumpenanlage im Heizbetrieb indirekt über einen Wärmeträgerkreislauf, so können in diesen Kreislauf weitere Wärmetauscher im Wärmetausch mit anderen Betriebsflüssigkeiten und Komponenten stehen. Die Verschaltung des Kreislaufes ist abhängig von der Aufheizpriorität der Komponenten oder Systeme. Sie befinden sich daher stromaufwärts oder stromabwärts des Heizungswärmetauschers.

Sinngemäß kann bei Fahrtbeginn im Betrieb der integrierten Wärmepumpenanlage im Kühlbetrieb indirekt über den Wärmeträgerkreislauf zum Heizen Wärme in den Kreislauf eingebracht werden, welche zur Aufheizung anderer Betriebsflüssigkeiten und Komponenten genutzt werden kann. Die Wärmeabfuhr aus dem Kältemittelkreislauf ist dabei sehr hoch.

Ferner beinhaltet die Erfindung anstelle des direkt mit Luft und Kältemittel beaufschlagten Verdampfer im Klimakasten einen Wärmeträgerflüssigkeits-/Luft Wärmetauscher im Klimakasten einzusetzen. Die Wärmeübertragung an die Innenraumluft erfolgt damit indirekt über einen kleinen aktiven Kreislauf von Wärmeträgerflüssigkeit. Der WärmeträgerflüssigkeitsKreislauf besteht aus einer Flüssigkeitspumpe und einem und einem Flüssigkeits-/Luft Wärmetauscher. Der Wärmeträgerflüssigkeitskreislauf kann daneben einen Flüssigkeits- Speicherbehälter enthalten, welcher das im Umlauf befindliche Flüssigkeitsvolumen entsprechend erhöhen kann. In diesem Flüssigkeitskreislauf zirkuliert nur ein kleines Flüssigkeitsvolumen bis die Kriterien für ein Aufladen des Speichers erfüllt sind. Hiernach strömt ein Teilvolumen der umlaufenden Flüssigkeit in den Speicher, bis der Speicher eine gewünschte oder erreichbare Temperatur angenommen hat. Diese kann während des normalen Fahrzeugbetriebs aufrecht erhalten werden. Fällt nun die Leistung der Kälteanlage ab oder wird diese abgestellt, so kann durch Auskopplung der im Speicher enthaltenen Wärmeträgerflüssigkeit die Temperatur der umlaufenden Wärmeträgerflüssigkeit für einen gewissen Zeitraum auf einen nutzbaren Temperaturniveau gehalten werden.

Die Erfindung beschreibt weiterhin einen Kältekreislauf in welchem die Wärmeübertragung beim Kühlen und Heizen des Luftstromes indirekt erfolgt und im welchen die Strömungsrichtung des Kältemittels im Kältekreislauf umkehrbar ist. Beim Kühlbetrieb strömt das Kältemittel vom Verdichter über ein Schaltventil über den Kondensator/Gaskühler und die Hochdruckseite des Inneren Wärmetauscher zu einem ersten Expansionsventil, in welchem das Kältemittel sich verflüssigt und über den Verdampfer, den Sammler und die Niederdruckseite des Inneren Wärmetauschers über ein weiteres Schaltventil in den Kältemittelverdichter. Der Gaskühler führt Wärme an die Umgebung ab. Der Verdampfer ist als Kältemittel-/Wärmeträgerflüssigkeits- Wärmetauscher ausgeführt und befindet sich außerhalb des Klimakasten. Er tauscht seine Wärme mit einer Wärmeträgerflüssigkeit welche dann in einen Flüssigkeits-/Luft Wärmetauscher die Innenraumluftstrom für die Fahrzeugkabine kühlt und trocknet. Durch den in seinem Fördervolumen regelbaren Verdichter kann der im Kreislauf umlaufende Kältemittelmassenstrom eingestellt werden. Durch die gegebenenfalls regelbare Pumpe für das Umpumpen der Wärmeträgerflüssigkeit kann eine gewünschte Verdampfertemperatur eingestellt werden. Beim Betrieb der Kälteanlage zum Kühlen können zwei Betriebsfälle auftreten, Kühlen und Trocknen oder Kühlen/Trocknen und Heizen (Reheat). Bei letzteren erfolgt die Erwärmung des Luftstroms für den Innenraum im Klimakasten über den Heizungswärmetauscher stromabwärts des Verdampfers Flüssigkeits-/Luft Wärmetauschers.

Beim Heizbetrieb strömt das Kältemittel vom Verdichter über ein Schaltventil über den Kältemittel-/Wärmeträgerflüssigkeits- Wärmetauscher im Bypass durch das erste Expansionsventil, den Inneren Wärmetauscher zu einer weiteren Expansionseinrichtung , in welcher das Kältemittel sich verflüssigt und über den Gaskühler/Kondensator über ein weiteres Schaltventil in den Kältemittelverdichter. Der Sammler und der Innere Wärmtauscher können dabei durchströmt sein. Der Gaskühler führt Wärme aus der Umgebung zu. Der Flüssigkeits-/Luft Wärmetauscher Klimakasten wird bei trockener Wärmetauscher-Luftseite von der warmen Wärmeträgerflüssigkeit durchströmt und erwärmt den Innenraumluftstrom der Fahrzeugkabine. Bei nasser Wärmetauscher-Luftseite wird die warme Wärmeträgerflüssigkeit in den Kühlmittelkreislauf des Fahrantriebes geleitet und über den Heizungswärmetauscher im Klimakasten dem Innenraum zugeführt.

Dank der Erfindung kann eine Wärmepumpenanlage für das Kühlen und Trocknen und Heizen der Innenraumluft für die Fahrzeugkabine verwendet werden. Zwischen dem Betriebsmodus Heizen und Kühlen kann beliebig umgeschaltet werden, ohne das hier besonders im Winter eine Beeinträchtigung der durch Scheibenbeschlag auftreten kann. Des weiteren wird bei Bedarf eine kontinuierliche Trocknung der Innenraumluft auch bei Betrieb der Wärmepumpe möglich. Durch das spontane Ansprechen der Wärmepumpe als Heizung wird das Motorkühlmittel nicht zur Heizung benötigt. Der Antriebsmotor erreicht daher schnell seine Betriebstemperatur. Verbrauchs- und Schadstoffreduktion werden möglich. Bei der Nutzung von Wärmeträgerflüssigkeiten zum Energietransport zum Kühlen und Heizen der Innenraumluft befinden sich keine kältemittelführende Komponenten im Innenraum oder im Luftstrom zur Fahrzeugkabine. Damit können auch Kältemittel in Fahrzeugen Verwendung finden, welche für die Anwendung vorteilhaft sind, aber aufgrund von Brennbarkeit oder toxikologischen Gründen ausscheiden. Werden Wärmeträgerflüssigkeiten verwendet, so sind die aktiven Flüssigkeitsvolumina klein. Die Dynamik nach dem Start bleibt damit erhalten, welches eine schnelle Aufheizung bzw. Abkühlung des Innenraumes erlaubt. Der Kreislauf kann durch ein zusätzliches Speichervolumen erweitert werden. Hiermit wird ein hohes Maß an thermischen Komforts auch bei kurzen Stopps aufrechterhalten. Nach kurzen Fahrtunterbrechungen steht beim Starten ein vorkonditioniertes Speichervolumen mit entsprechender Wärmekapazität zum schnellen Erlangen der Innenraumkonditionen bereit.
Bei Nutzung der Wärmepumpenanlage für das Kühlen und Heizen kann entweder die abzuführende Wärme oder die bereitgestellte Nutzwärme zum Beheizen weiterer Fahrzeugsysteme, wie Antriebsmotor, Getriebe, Differentialgetriebe, etc. verwendet werden. Hierdurch sinkt der Kraftstoffverbrauch nach Kaltstart und der Bauteilverschleiß erheblich. Des weiteren wird im Kühlbetrieb zu Beginn sehr viel Wärme dem Kreislauf entzogen, was wiederum eine hohe Anfangsleistung der Kälteanlage nach sich zieht und den Komfort im Innenraum schneller erreichbar macht.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:

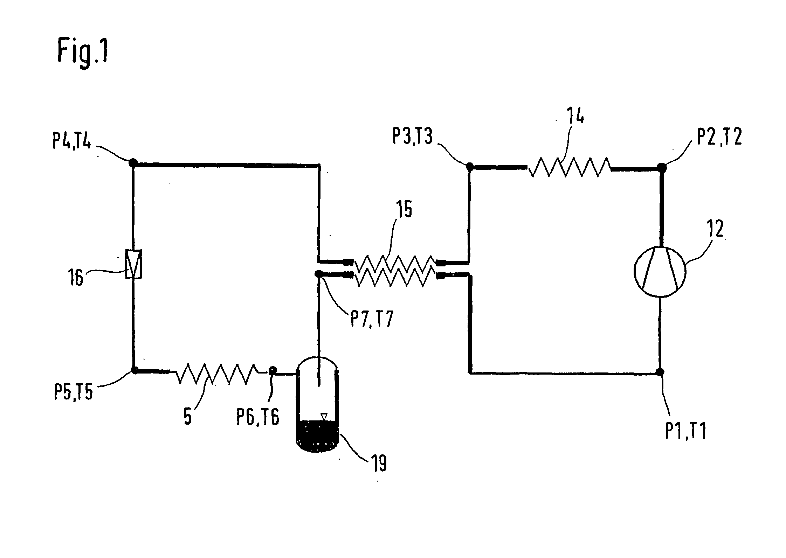

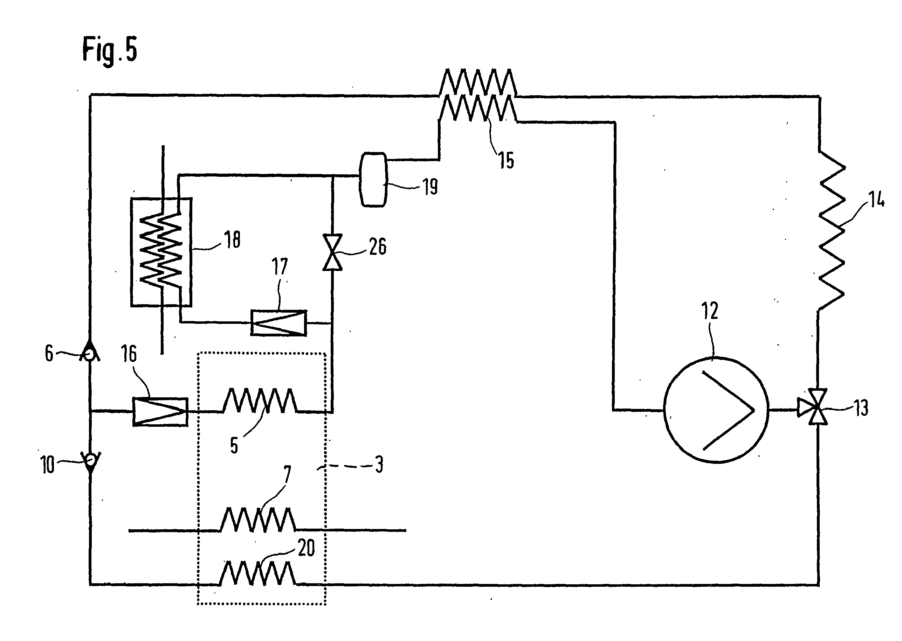

**Fig.1** schematisch in einer Prinzipskizze einen Dampfkompressionskreislauf mit einem regelbaren Verdichter und einem Drosselmittel, entsprechend einem Kühkreislaufzweig der in Fig. 5 gezeigten Wärmepampenanlage.

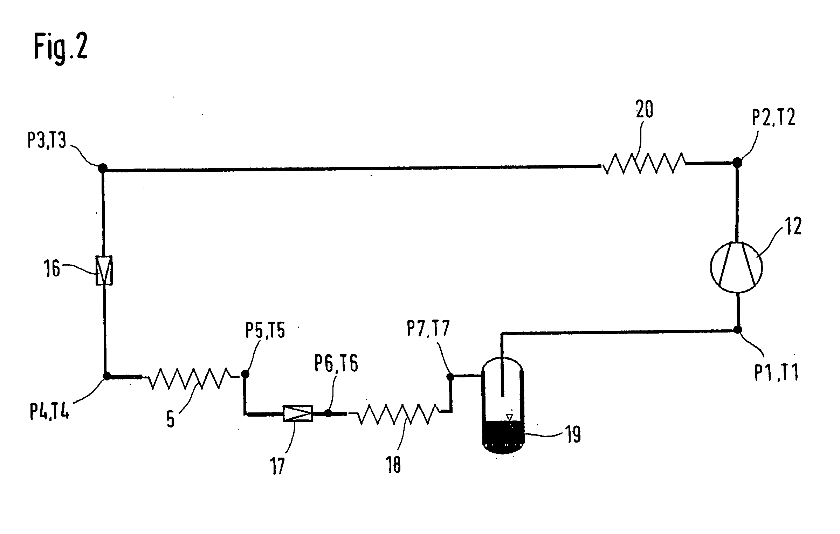

**Fig. 2** schematisch in einer Prinzipskizze einen Dampfkompressionskreislauf mit einem Verdichter, einem zweiten Wärmetauscher und einem zweiten Drosselmittel.

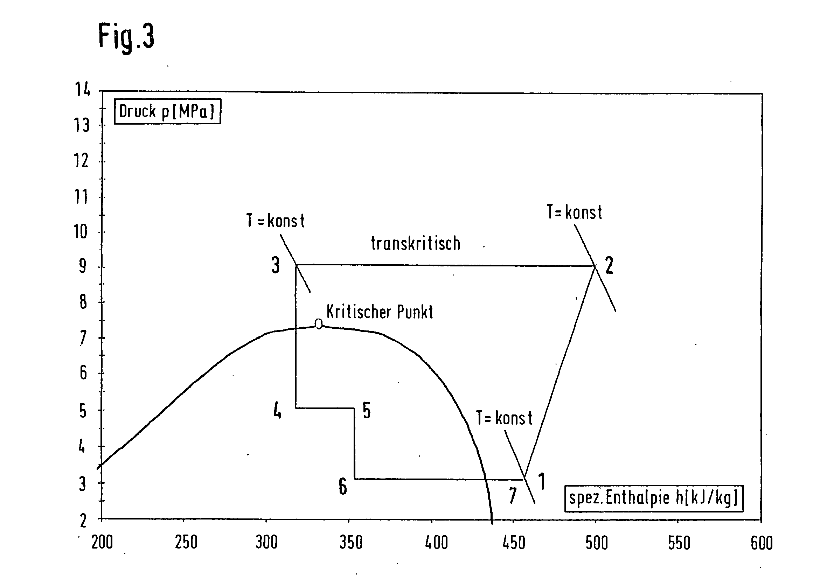

**Fig. 3** schematisch in einem p-h Diagramm einen Kältemittelkreislauf mit einem Verdichter, Wärmtauschern und Drosselmittel.

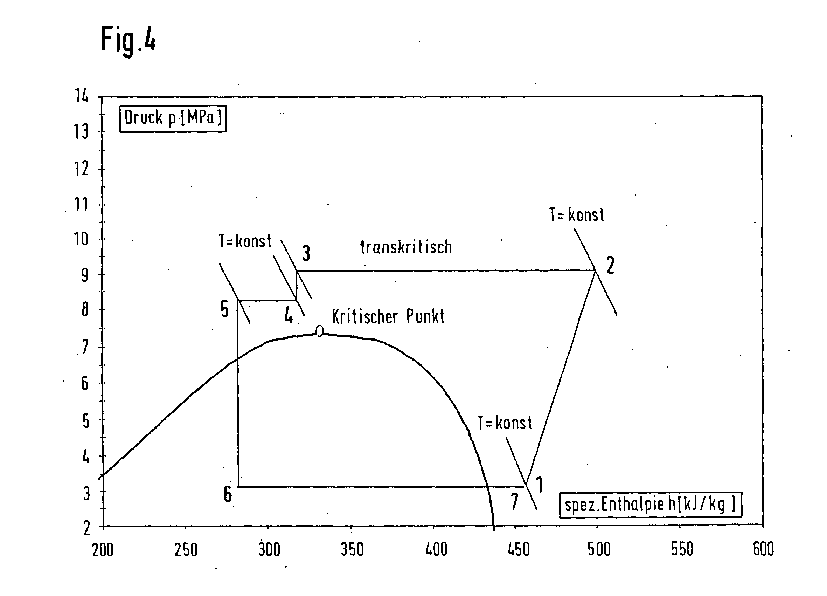

**Fig. 4** schematisch in einem p-h Diagramm einen Kältemittelkreislauf mit einem Verdichter, Wärmtauschern und Drosselmittel.
**Fig. 5** schematisch in einer Prinzipskizze eine integrierte Wärmepumpenanlage, die im Heizmodus eine 2-stufige Expansion ermöglicht und mit wasserseitigen Wärmeaufnahme arbeitet.

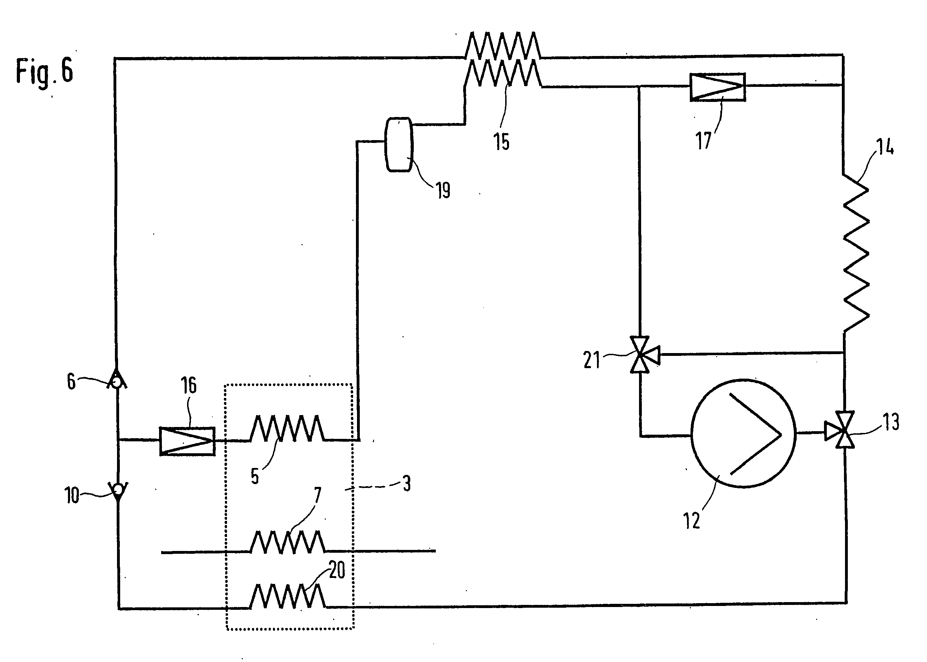

**Fig. 6** schematisch in einer Prinzipskizze eine integrierte Wärmepumpenanlage, die im Heizmodus eine 2-stufige Expansion ermöglicht und mit luftseitigen Wärmeaufnahme arbeitet.

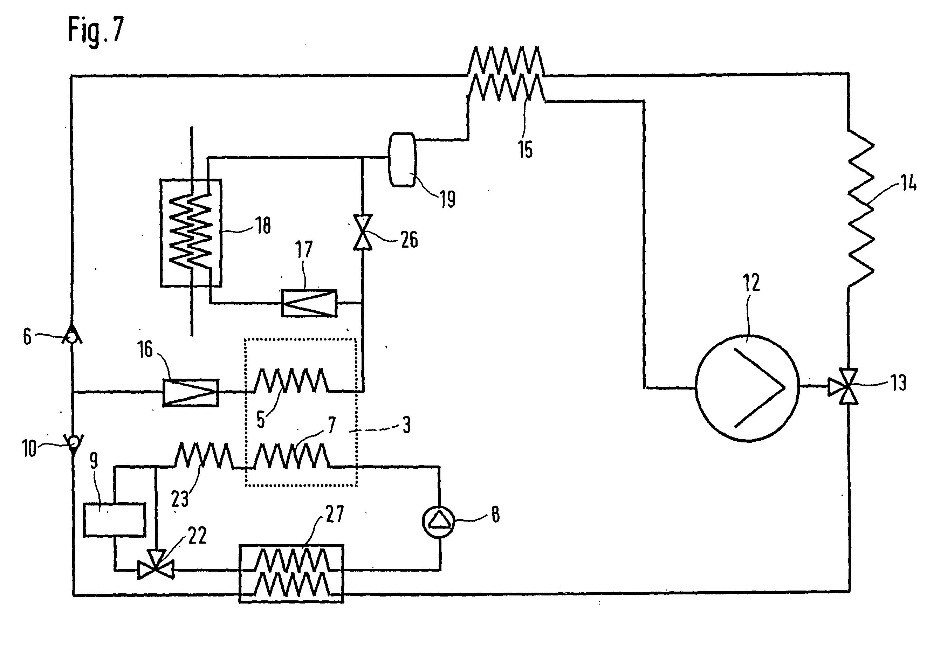

**Fig. 7** schematisch in einer Prinzipskizze eine integrierte Wärmepumpenanlage, die im Heizmodus eine 2-stufige Expansion ermöglicht, die Wärme indirekt mittels einer Wärmeträgerflüssigkeit überträgt und mit Wärmeaufnahme aus einem Kühlmittel arbeitet.

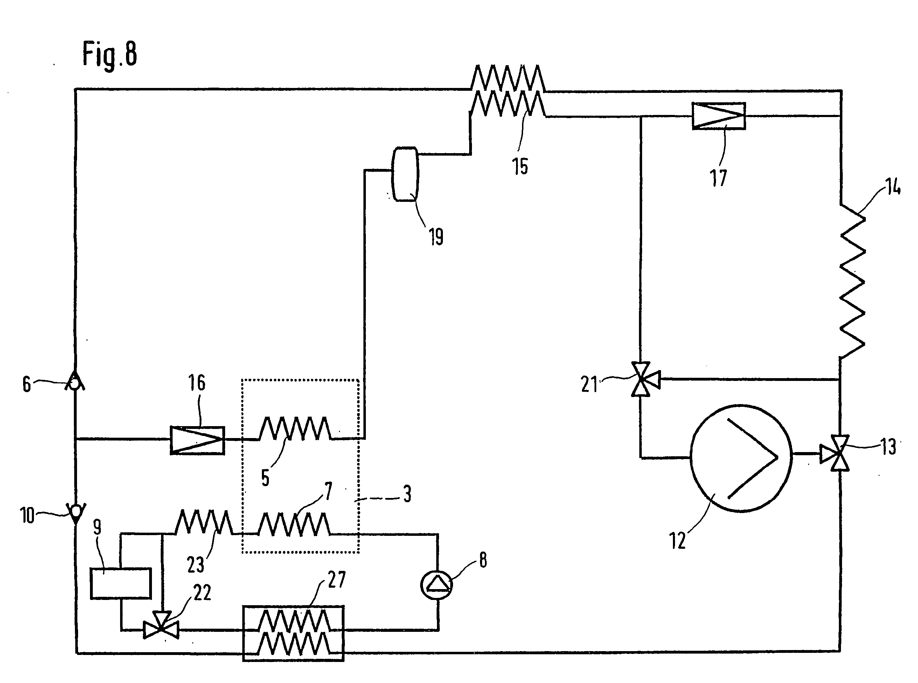

**Fig. 8** schematisch in einer Prinzipskizze eine integrierte Wärmepumpenanlage, die im Heizmodus eine 2-stufige Expansion ermöglicht, die Wärme indirekt mittels einer Wärmeträgerflüssigkeit überträgt und mit Wärmeaufnahme aus der Umgebungsluft arbeitet.

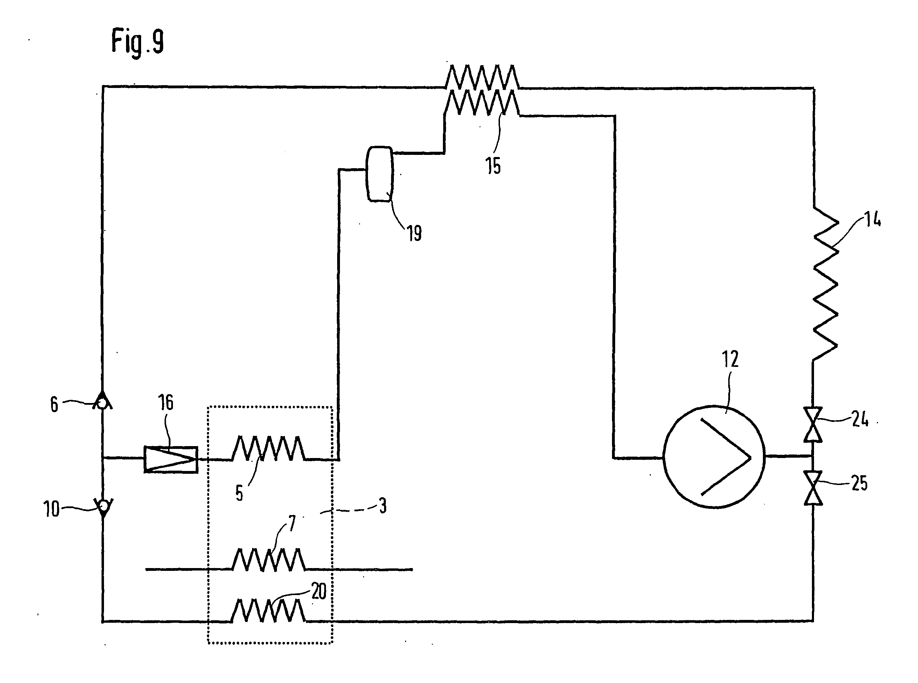

**Fig. 9** schematisch in einer Prinzipskizze eine nicht erfindungsgemäße integrierte Wärmepumpenanlage, die im Heizmodus eine 2-stufig expandiert und mit Wärmeaufnahme aus der Kabinenluft arbeitet.

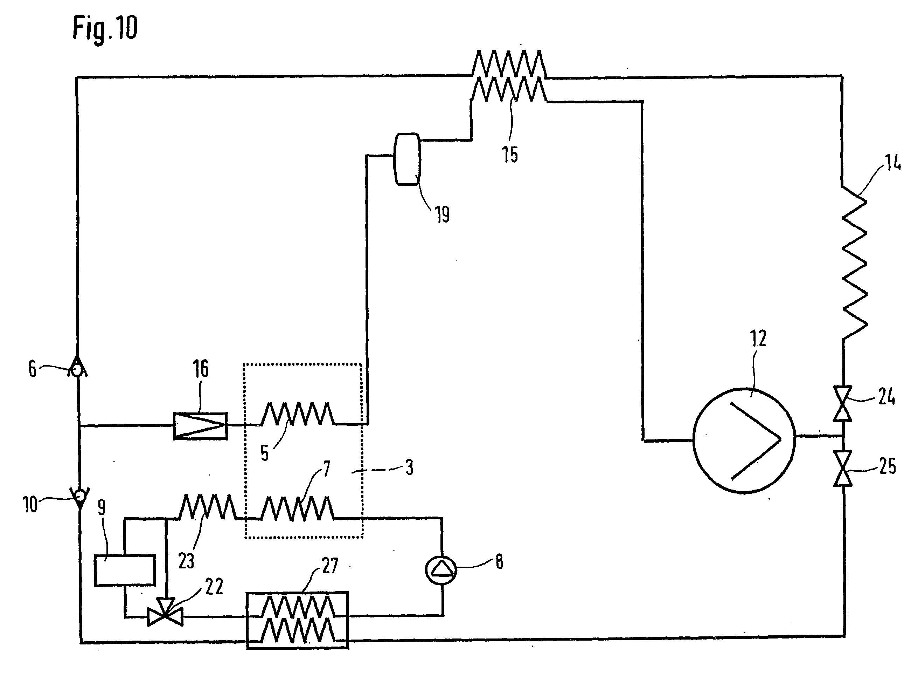

**Fig. 10** schematisch in einer Prinzipskizze eine nicht erfindungsgemäβe integrierte Wärmepumpenanlage, die im Heizmodus eine 2-stufige Expansion ermöglicht, die Wärme indirekt mittels einer Wärmeträgerflüssigkeit überträgt und mit Wärmeaufnahme aus der Kabinenluft arbeitet.

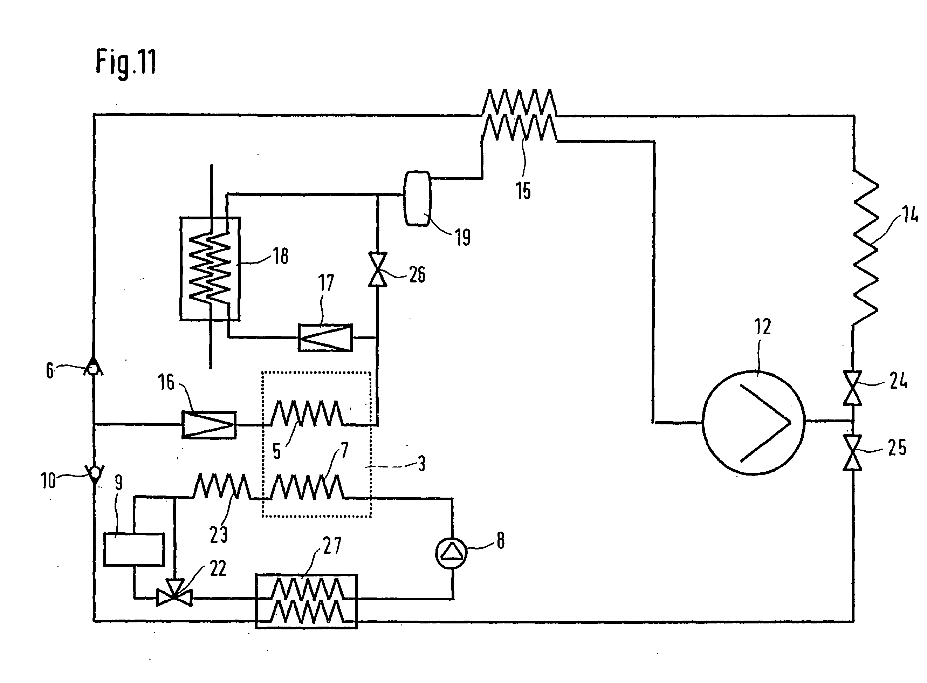

**Fig. 11** schematisch in einer Prinzipskizze eine integrierte Wärmepumpenanlage, die im Heizmodus eine 2-stufige Expansion ermöglicht, die Wärme indirekt mittels einer Wärmeträgerflüssigkeit überträgt und mit Wärmeaufnahme aus dem Kühlmittel arbeitet

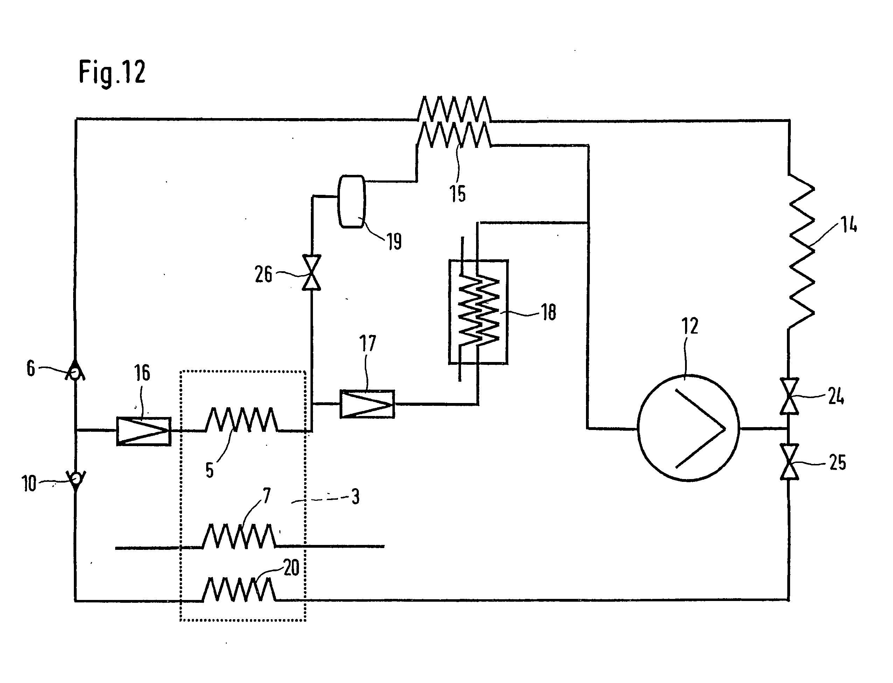

**Fig. 12** schematisch in einer Prinzipskizze eine integrierte Wärmepumpenanlage, die im Heizmodus eine 2-stufige Expansion ermöglicht und mit Wärmeaufnahme aus dem Kühlmittel arbeitet.

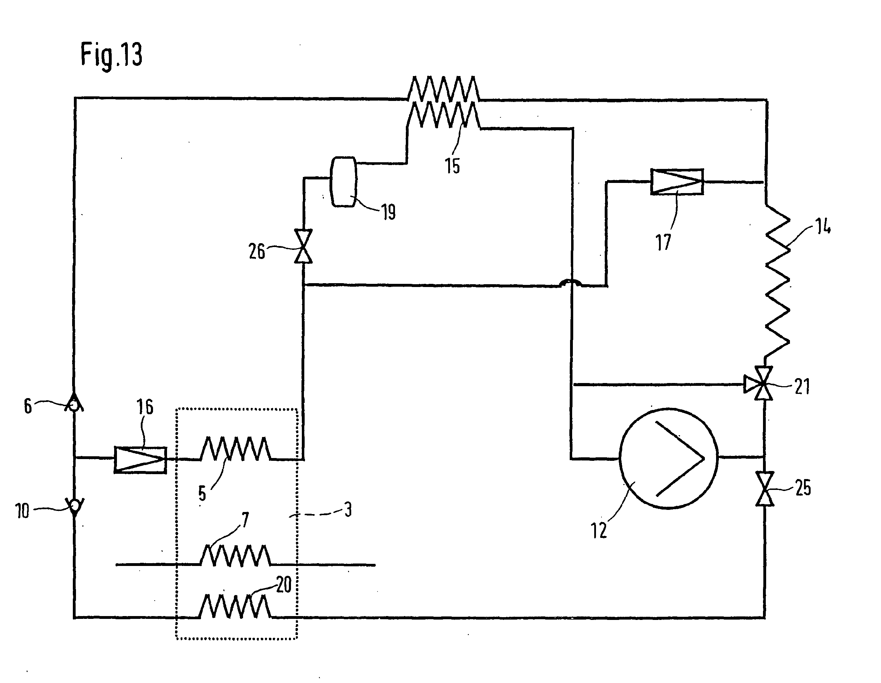

**Fig. 13** schematisch in einer Prinzipskizze eine integrierte Wärmepumpenanlage, die im Heizmodus eine 2-stufige Expansion ermöglicht und mit Wärmeaufnahme aus der Luft arbeitet.

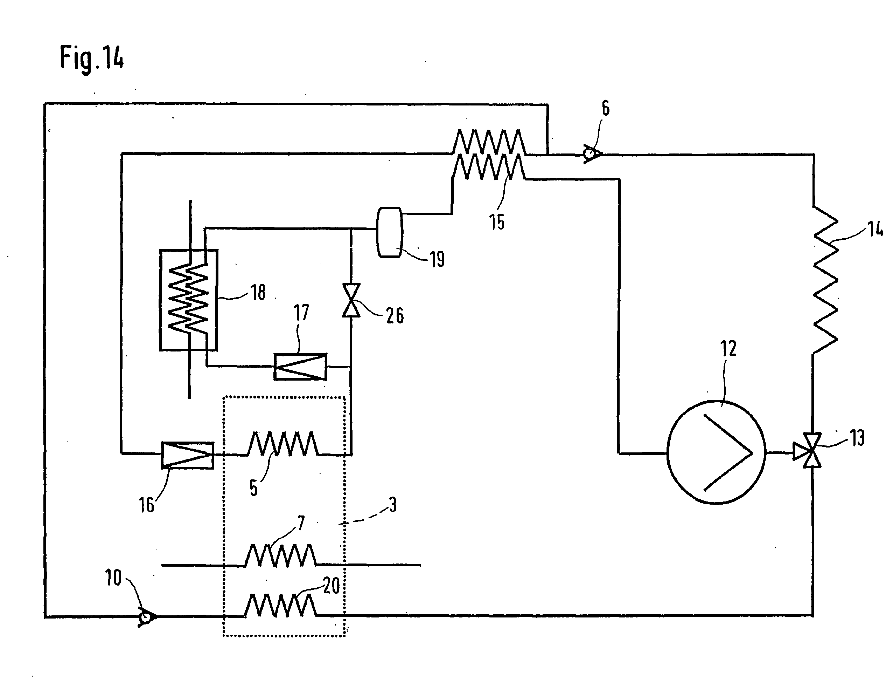

**Fig. 14** schematisch in einer Prinzipskizze eine integrierte Wärmepumpenanlage, die im Heizmodus eine 2-stufige Expansion ermöglicht und mit Wärmeaufnahme aus dem Kühlmittel arbeitet.

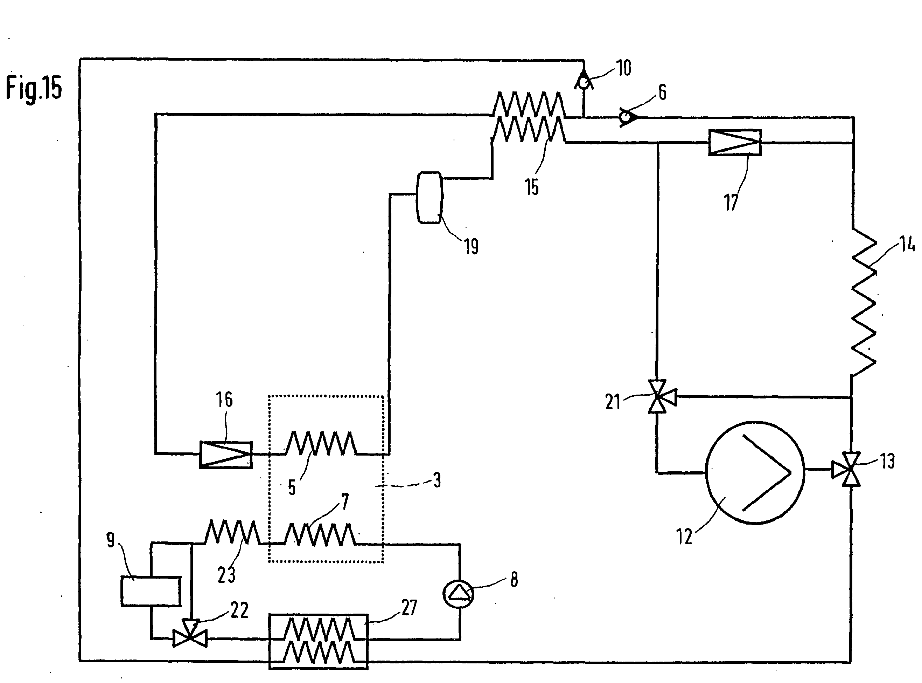

**Fig. 15** schematisch in einer Prinzipskizze eine integrierte Wärmepumpenanlage, die im Heizmodus eine 2-stufige Expansion ermöglicht, die Wärme indirekt mittels einer Wärmeträgerflüssigkeit überträgt und mit Wärmeaufnahme aus der Luft arbeitet.

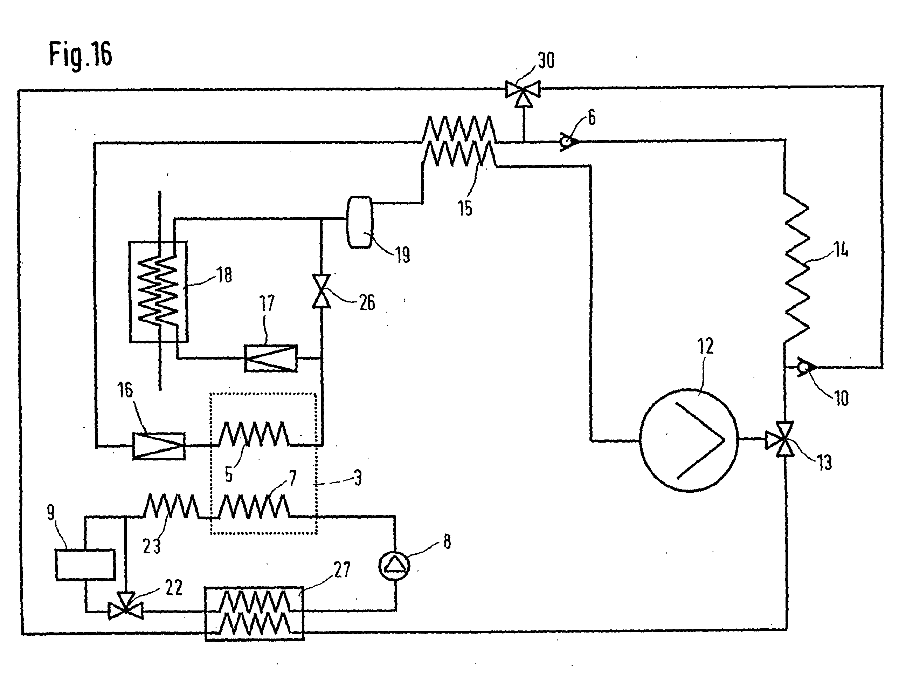

**Fig. 16** schematisch in einer Prinzipskizze eine integrierte Wärmepumpenanlage, die im Kühlmodus die Wärme indirekt mittels einer Wärmeträgerflüssigkeit und nachfolgend mittels Außenluft überträgt.

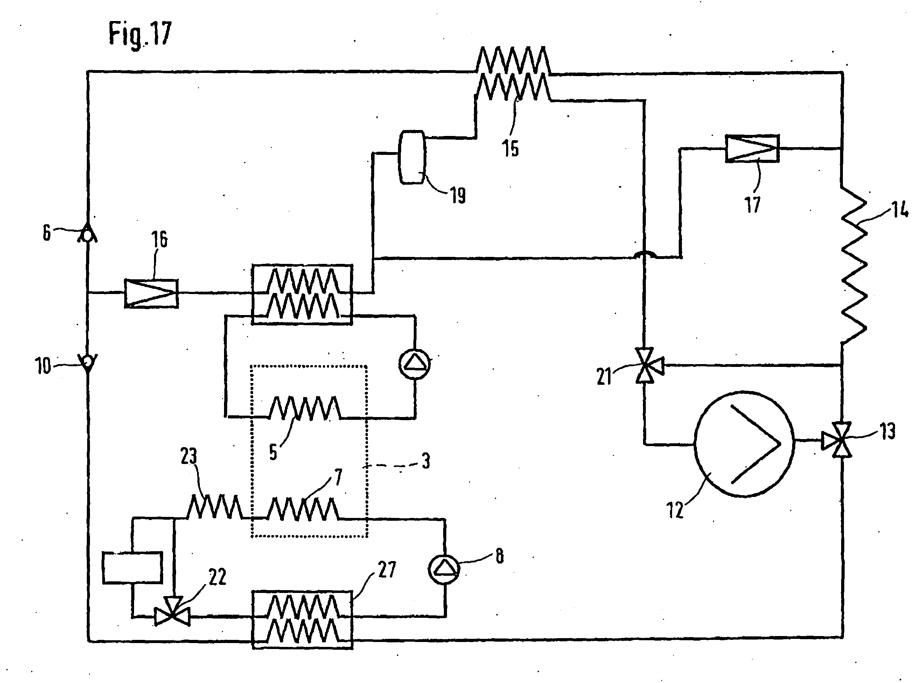

**Fig. 17** schematisch in einer Prinzipskizze eine integrierte Wärmepumpenanlage, die im Heizmodus eine 2-stufige Expansion ermöglicht, die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und bei Wärmepumpenbetrieb die Wärme aus der Luft aufnimmt.

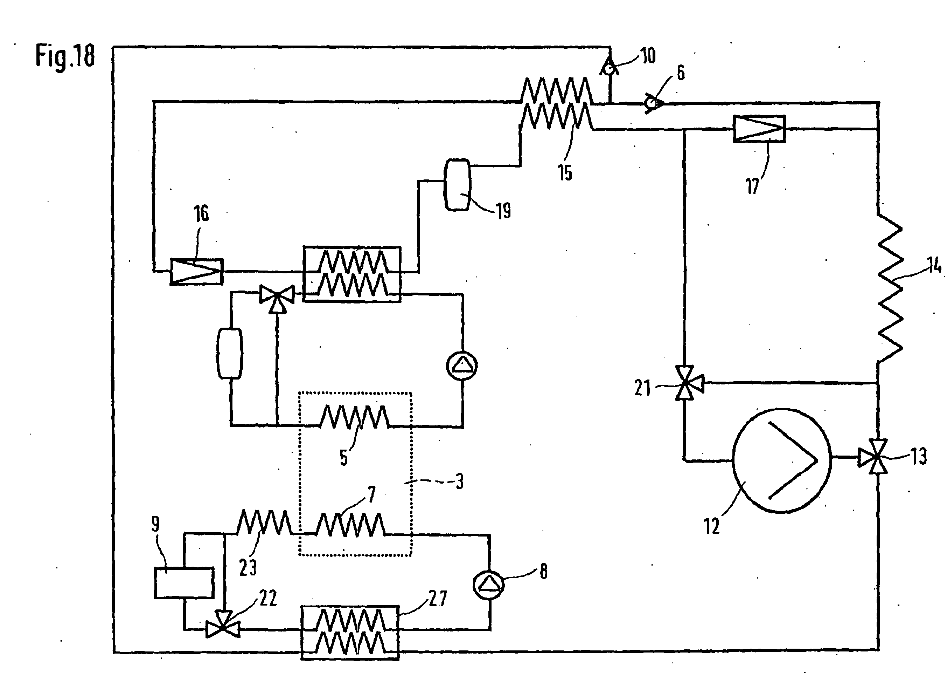

**Fig. 18** schematisch in einer Prinzipskizze eine integrierte Wärmepumpenanlage, die im Heizmodus eine 2-stufige Expansion ermöglicht, die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und bei Wärmepumpenbetrieb die Wärme aus der Luft aufnimmt.

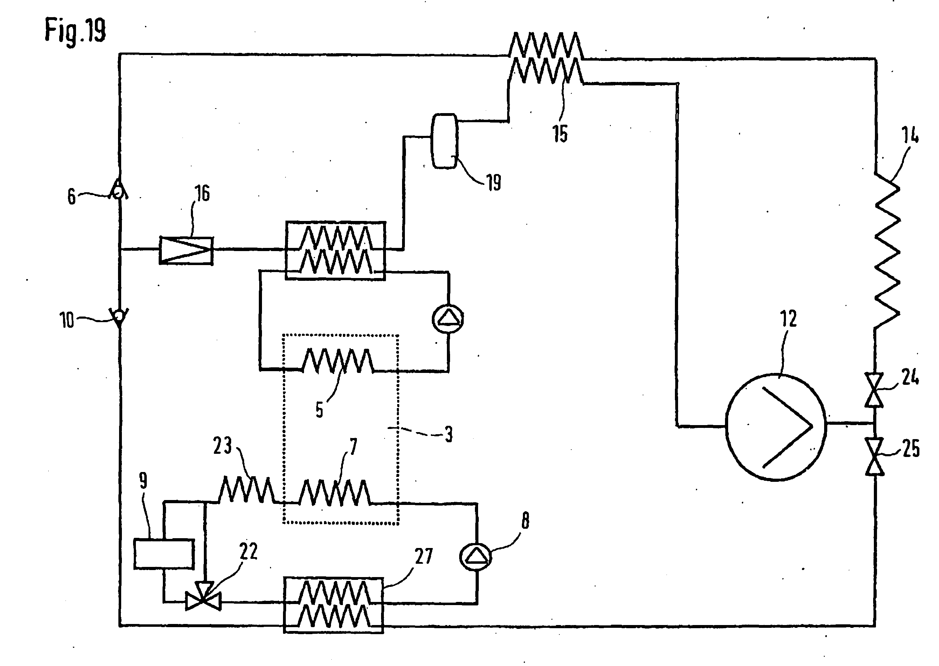

**Fig. 19** schematisch in einer Prinzipskizze eine nicht erfindungsgemäße integrierte Wärmepumpenanlage, die im Heizmodus die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und beim Kühlen die Wärme aus dem Kreislauf an die erste Wärmeträgerflüssigkeit und/oder an die Außenluft übertragbar ist.

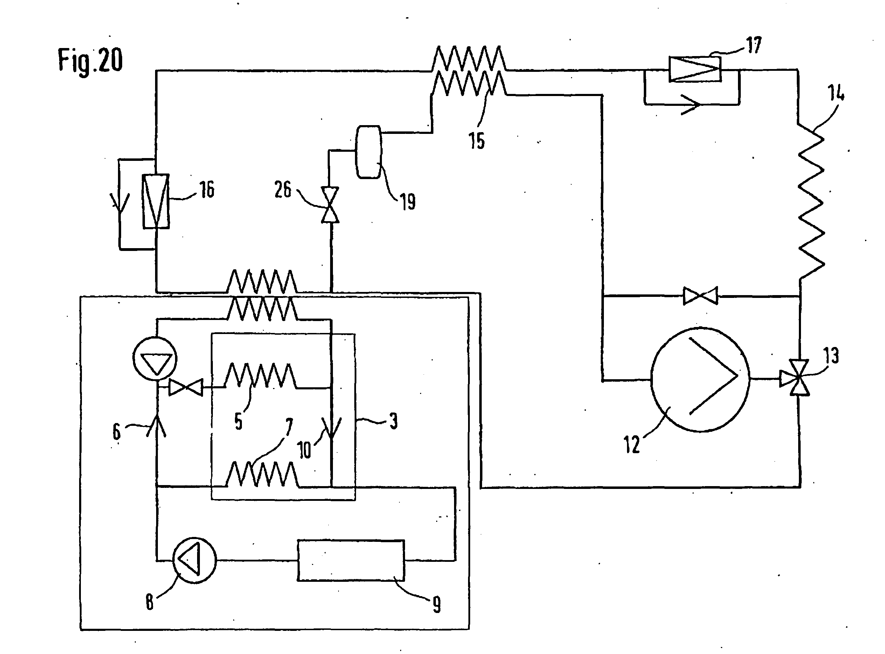

**Fig. 20** schematisch in einer Prinzipskizze eine integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt.

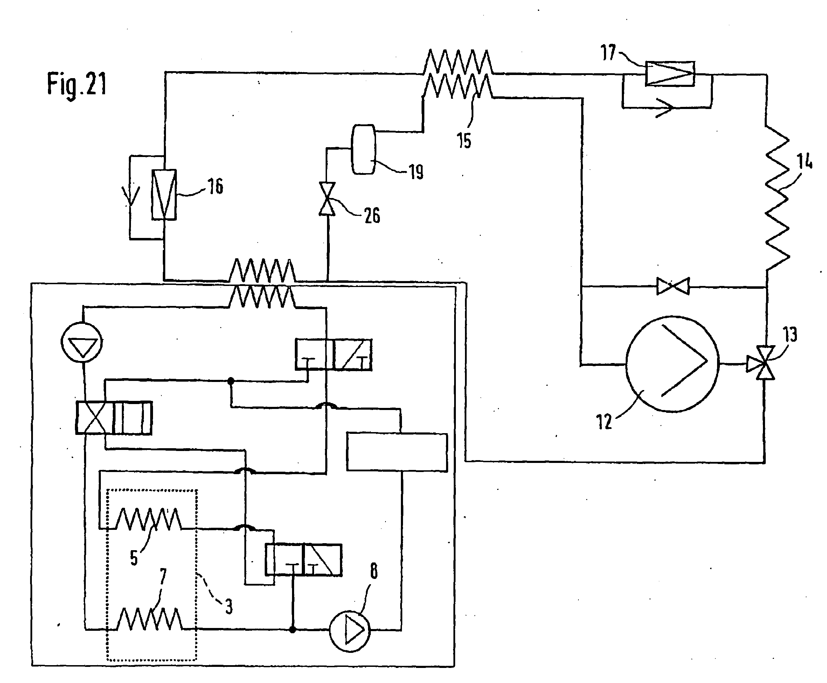

**Fig. 21** schematisch in einer Prinzipskizze eine integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt und die Verschaltung des Kühlmittelkreises darstellt.

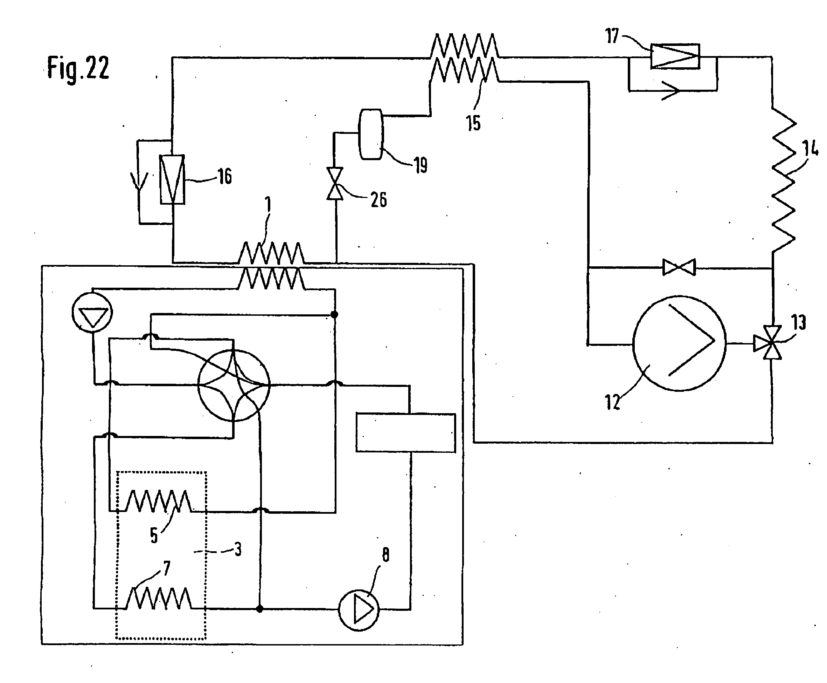

**Fig. 22** schematisch in einer Prinzipskizze eine integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt und die Verschaltung des Kühlmittelkreises in einer Ventileinheit darstellt.
**Fig. 1** zeigt einen Kreislauf, der in Reihe geschaltet sukzessiv hintereinander einen Verdichter 12, einen Gaskühler/Kondensator 14, einen Inneren Wärmetauscher 15, ein Drosselmittel 16, einen Verdampfer 5 und einen Sammler 19 beinhaltet. Der Verdichter ist bezüglich seines Kältemittel-Massenstromes regelbar. Ebenfalls regelbar ist das Drosselmittel 16, das als Expansionsventil ausgebildet sein kann. Der Kreislauf gemäß **Fig. 1** entspricht einem Kühlkreislaufzweig der in **Fig. 5** gezeigten integrierten Wärmepumpenanlage.
**Fig. 2** zeigt einen erfindungsgemäβen, als Wärmepumpe ausgebildeten Kältekreislauf, der in Reihe geschaltet sukzessiv hintereinander einen Verdichter 12, einen Gaskühler/Kondensator 20, ein erstes Drosselmittel 16, einen ersten Verdampfer 5, ein zweites Drosselmittel 17, einen zweiten Verdampfer 18 und einen Sammler 19 beinhaltet. Der Verdichter ist bezüglich seines Kältemittel-Massenstromes regelbar. Ebenfalls regelbar ist das erste Drosselmittel 16, das zweite Drosselmittel 17 kann regelbar und dicht abzusperren ausgeführt sein. Das zweite Drosselmittel 17 kann auch als Konstantdrosselelement mit zusätzlicher Absperreinrichtung ausgeführt sein. Verdampfer 5 wird in der Wärmepumpenanlage im Kühlbetrieb als Verdampfer betrieben. Im Heizbetrieb kann er zwei Funktionen, als Verdampfer öder als Gaskühler ausführen. Wird im Heizbetrieb, vor der eigentlichen Erwärmung der Kabinenluft, diese getrocknet oder ist die luftseitige Oberfläche des Verdampfers noch mit Kondensat benetzt, so arbeitet der Verdampfer als Verdampfer. Dieser Betriebsfall kommt häufig bei Außentemperaturen von etwa 10K oberhalb des Gefrierpunktes und etwa 10K unterhalb des Gefrierpunktes vor. Ist die luftseitige Oberfläche trocken und es wird die Luft nicht getrocknet, wie bei Lufteintrittstemperaturen unterhalb des Gefrierpunktes, wird der Verdampfer 5 als Gaskühler/Kondensator betrieben.

Arbeitet der Verdichter 12 unter hoher Last - d.h. in einer Wärmepumpenanlage im Heizbetrieb z. B. als transkritischer Kälteprozess, so verdichtet er wie in **Fig. 3** einen Kältemittel-Massenstrom von einem Ausgangsdruck P1 auf einen höheren Druck P2 oberhalb des kritischen Druckes, wobei die Prozesstemperatur von T1 auf T2 ansteigt. Das verdichtete gasförmige Kältemittel wird in den Gaskühler/Kondensator 20 über ein durchströmendes Kühlmittel, wie der Luftmassenstrom für die Fahrzeugkabine oder eine Wärmeträgerflüssigkeit, isobar auf eine Temperatur T3 abgekühlt.

Das Kältemittel wird beim Durchströmen des Expansionsventils 16 isenthalp auf einen Zwischendruck Druck P4, der dem zwischen dem Ausgangsdruck P1 und dem Verdichtungsdruck P2 liegt, entspannt, wobei sich das Kältemittel auf eine Temperatur T4 weiter abkühlt, die sich bereits im Verflüssigungsbereich des Kältemittels befinden kann. Erreicht das evtl. so entstandene Zwei-Phasen-Gemisch Gas/Flüssigkeit des Kältemittels den Verdampfer 5, verdampft ein Flüssigkeitsanteil des Zwei-Phasen-Gemisches durch die Wärmeaufnahme. Das Kältemittel wird beim Durchströmen des Expansionsventils 17 isenthalp bis auf den Ausgangsdruck P1 entspannt, wobei die Temperatur des Kältemittels bis auf T6 abfällt. Durch den Wärmeeintrag der Aussenluft oder des Motorkühlmittels erwärmt sich das Kältemittel auf die Temperatur T7. Wird nicht der gesamte flüssige Anteil des Kältemittels verdampft so sammelt sich das flüssige Kältemittel danach im Pufferbehälter 19 und gelangt von dort als Gemisch von flüssigem und gasförmigen Kältemittel in den Verdichter 12.

In **Fig. 4** wird hingegen das Expansionsventil 16 als vollständig geöffnet dargestellt. Das Kältemittel erfährt so nur eine geringe Entspannung. Der Zwischendruck P4 entspricht nahezu dem Verdichtungsdruck P2. Das Kältemittel kühlt weiter bis auf die Temperatur T5 ab. Der Verdampfer 5 arbeitet nun als Gaskühler/Kondensator. Das Kältemittel wird beim Durchströmen des Expansionsventils 17 isenthalp bis auf den Ausgangsdruck P1 entspannt, wobei die Temperatur des Kältemittels bis auf T6 abfällt. Durch den Wärmeeintrag der Aussenluft oder des Motorkühlmittels erwärmt sich das Kältemittel auf die Temperatur T7. Wird nicht der gesamte flüssige Anteil des Kältemittels verdampft so sammelt sich das Kältemittel danach im Pufferbehälter 19 und gelangt von dort in den Verdichter 12.

**Fig. 5** zeigt schematisch in einer Prinzipskizze eine erfindungs-gemäβe integrierte Wärmepumpenanlage.
Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das zweite Expansionsventil (17) ist nicht geschaltet und damit geschlossen. Das Kältemittel strömt über das geöffnete Ventil (26) in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.

Ist das Ventil 13 auf den Betriebsmodus Heizen geschaltet, gibt das Kältemittel die Wärme über Gaskühler/ Kondensator (20) an den Luftstrom für die Fahrzeugkabine ab. Nach Passieren des Rückschlagventil (10) gelangt das Kältemittel in das erste Expansionsventil (16). Nach entsprechender Drosselung und Wärmeaufnahme oder Wärmeabgabe im Verdampfer 5 strömt das Kältemittel durch das zweite Expansionsventil 17, in welchem es isenthalp auf das Verdampfungsdruckniveau der Wärmeaufnahme entspannt wird. Dabei ist Ventil 26 geschlossen. Im Kältemittel-/Wärmeträgerfluid-Wärmetauscher 18 wird dem Kältemittel Wärme aus dem Motorkühlmittel zugeführt und gegebenenfalls überhitzt. Das Kältemittel durchströmt den Sammler 19 und verlässt den Sammler 19 mit einer definierten Kältemittelqualität, d.h. Verhältnis gasförmiges Massenstrom zum Gesamtmassenstrom des Kältemittels. Das Kältemittel durchströmt dann die Niederdruckseite des Inneren Wärmetauschers und gelangt zum Verdichter . Rückschlagventil (6) und (10) werden nicht zwingend für die Funktion der Wärmepumpenanlage benötigt. Sie vermeiden in beiden Betriebsfällen, daß der jeweils nicht benötigte Kreislaufteil sich mit Kältemittel füllt. Um dieses in Bezug auf Leistung und Effizienz zu kompensieren, muss mehr Kältemittel in die Anlage eingefüllt werden, was aus Gründen des Umweltschutzes nicht zielführend ist.

Für die Steuerung der Öffnung der Expansionsventile 16 und 17 und damit der Einstellung des Zwischendruckniveaus sind zwei Betriebsstrategien möglich:

Im ersten Fall soll die in die Fahrzeugkabine geleitete Luft vor der Aufheizung getrocknet werden oder die luftseitige Oberfläche des Wärmetauschers ist mit Kondensat benetzt. Trocknung der Luft wird immer dann notwendig sein, wenn die einströmende Luft einen Taupunkt über dem Gefrierpunkt aufweist. Es ist besonders zielführend , die Verdampfungstemperatur des Kältemittels in dieser Komponente mit der Außentemperatur abzustimmen, um hier die notwendige Trocknung sicherzustellen um Scheibenbeschlag sicher zu vermeiden ohne jedoch die Luft aus hygienischen Gründen zu weit zu entfeuchten. Somit stellt auch Betrieb des Klimakastens im Umluftbetrieb im Winter, z.B. zur Komforterhöhung beim Aufheizen oder zur Verminderung des Schadstoffeintrags in die Kabine kein Problem mehr dar. Der Feuchtengehalt der einströmenden Luft in den Verdampfer kann mittels Feuchtensensor, Taupunktsensor, Beschlagssensor an der Frontscheibe, etc. ermittelt werden. Zusammen mit der Kenntnis der Außentemperatur kann somit eine Notwendigkeit der Trocknung ermittelt werden. Mit einem Nässesensor an einer charakteristischen Position an der Oberfläche des Verdampfers kann ermittelt werden, ob der Verdampfer nass ist. In diesem Falle kann der Verdampfer solange weiter als Verdampfer betrieben werden. Die Verdampfungstemperatur wird entweder wie bei der Trocknung geregelt oder in der Nähe des Gefrierpunktes gehalten.

Bei der Steuerung der Expansionsventile wird bei zu niedriger Ist-Temperatur das erste Expansionsventil 16 etwas mehr geöffnet und das Expansionsventil 17 etwas mehr geschlossen, bis die Verdampfungstemperatur im Verdampfer die gewünschte Soll- Temperatur erreicht hat. Umgekehrt wird Expansionsventil 16 etwas weniger geöffnet und Expansionsventil 17 etwas mehr geöffnet wenn die Ist-Verdampfertemperatur oberhalb der Soll-Temperatur liegt. Der gewünschte Verdichtungsdruck bleibt von dieser Maßnahme unbeeinflusst, da der Gesamtdruckverlust durch das erste Expansionsventil16 , den Verdampfer 5 und das zweite Expansionsventil 17 konstant bleibt.

Im zweiten Fall soll mit dem Verdampfer die einströmende Luft in die Kabine vorgewärmt werden. Dies ist nur bei trockener luftseitiger Oberfläche des Verdampfers sinnvoll. Wenn durch geeignete Maßnahmen ein Feuchteneintrag in den Innenraum durch verdampfendes Wasser sicher vermieden werden kann, dann wird das Expansionsventil 16 vollständig geöffnet. Damit Heizen zwei Wärmetauscher im Gegenstrom mit der Kabinenluft im Klimakasten. Es kann eine sehr hohe Leistung übertragen werden. Die Kältemitteleintrittstemperatur in den Verdampfer 5 nahezu gleich mit der Kältemittelaustrittstemperatur am Gaskühler/Kondensator 20 im Klimakasten 3.

**Fig. 6** zeigt schematisch in einer Prinzipskizze eine erfindungs-gemäße integrierte Wärmpumpenanlage, die beim Heizen mit einer 2-stufigen Expansion arbeitet. Die eigentliche Wärmeaufnahme des Kältekreislaufes beim Heizen erfolgt aus der Außenluft. Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 13 auf den Betriebsmodus Heizen geschaltet, gibt das Kältemittel die Wärme über den Gaskühler/Kondensator (20) an den Luftstrom für die Fahrzeugkabine ab. Nach Passieren des Rückschlagventil (10) gelangt das Kältemittel in das erste Expansionsventil (16). Nach entsprechender Drosselung und Wärmeaufnahme oder Wärmeabgabe im Verdampfer 5 strömt das Kältemittel durch den Sammler 19 und verlässt den Sammler 19 mit einer definierten Kältemittelqualität dann zur Niederdruckseite des Inneren Wärmetauschers. Das Schaltventil 21 versperrt den direkten Weg zum Verdichter, somit wird das zweite Expansionsventil 17 durchströmt , in welchem es isenthalp auf das Verdampfungsdruckniveau der Wärmeaufnahme entspannt wird. Im Kondensator/ Gaskühler 14 wird dem Kältemittel Wärme aus der Umgebung zugeführt und gegebenenfalls überhitzt. Das Kältemittel gelangt im Anschluss über das Schaltventil 21 zurück zum Verdichter 12 .
Besonders vorteilhaft ist an dieser Schaltung, dass der Motorkühlmittelkreislauf während der Aufwärmung des Fahrzeuges nicht zur Heizung der Kabine herangezogen wird.
Zur Wärmeaufnahme wird ein im Kältekreislauf vorhandener Wärmetauscher genutzt. Damit erwärmt sich der Antriebsmotor zügig, welches Verbrauch, Verschleiß und Emissionen gering hält.

**In** **Fig. 7** zeigt schematisch in einer Prinzipskizze eine erfindungsgemäße integrierte Wärmepumpenanlage.
Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das zweite Expansionsventil (17) ist nicht geschaltet und damit geschlossen. Das Kältemittel strömt über das geöffnete Ventil (26) in den Sammler (19). Auf der Niederdruckseite des Inneren Wärmetauscher (15) wird das Kältemittel überhitzt und anschließend vom Verdichter. (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 13 auf den Betriebsmodus Heizen geschaltet, gibt das Kältemittel die Wärme über einen Kältemittel-/Wärmeträgerfluid- Wärmetauscher (27)an das Motorkühlmittel ab. Nach Passieren des Rückschlagventil (10) gelangt das Kältemittel in das erste Expansionsventil (16). Nach entsprechender Drosselung und Wärmeaufnahme oder Wärmeabgabe im Verdampfer 5 strömt das Kältemittel durch das zweite Expansionsventil 17, in welchem es isenthalp auf das Verdampfungsdruckniveau der Wärmeaufnahme entspannt wird. Dabei ist Ventil 26 geschlossen. Im Kältemittel-/Wärmeträgerfluid- Wärmetauscher 18 wird dem Kältemittel Wärme aus dem Motorkühlmittel zugeführt und gegebenenfalls überhitzt. Das Kältemittel durchströmt den Sammler 19 die Niederdruckseite des Inneren Wärmetauschers 15 und gelangt zum Verdichter 12.
Die Übertragung der Wärme im Heizbetrieb erfolgt indirekt über das Motorkühlmittel. Das erhitzte Motorkühlmittel wird mit der Heizungspumpe (8) in den Heizungswärmetauscher (7) gefördert und gibt dort Wärme an den Luftstrom für die Fahrzeugkabine ab. Anschließend kann das Motorkühlmittel weitere Wärmetauscher zur Wärmaufnahme und -abgabe wie den Kühler für die Abgasrückführung (23) durchströmen. Ist die Temperatur des Motorkühlmittels vor Eintritt in den Motor höher als die des Motorkühlmittels im Motor, oder soll der Motor im Zusammenhang mit seiner Aufheizung nicht durchströmt werden, so wird es über das Ventil (22) direkt zum Kältemittel-Motorkühlmittel -Wärmetauscher (27) gefördert. Ist das Motorkühlmittel im Motor wärmer als das Motorkühlmittel vor Eintritt in den Motor so wird das Motorkühlmittel zur Wärmeaufnahme durch den Motor geleitet. Vorteile aus einer solchen Anordnung ergeben sich beim luftseitigem Druckabfall im Klimakasten durch nur 2 Wärmetauscher und bei der gleicher Regelung der Temperatur und Luftverteilung in der Kabine bei Heizbetrieb mit der Wärmepumpenanlage und der konventionellen Heizung. Ein weiterer Vorteil wird in Fahrzeugen mit zwei Klimakästen zu finden sein. Hierdurch kann der Aufwand für die Beheizung begrenzt werden.
Dem prinzipiellen Nachteil der Wärmeabgabe auf einem hohen Temperaturniveau kann zum einen durch die Verwendung eines Kältemittel-/ Wärmeträgerfluid- Wärmetauscher (27)nach dem Gegenstromprinzip begegnet werden, zum anderen wird die Luft im Verdampfer 5 aufgrund der im Kältemittel verbliebenen Energie deutlich vorgewärmt. Diese Option kann natürlich nur dann genutzt werden wenn die luftseitige Oberfläche des Verdampfers 5 trocken ist. Im Falle, daß die luftseitige Oberfläche des Verdampfers 5 nicht trocken ist, kann der Wärmetauscher beheizt werden und der entstehende Wasserdampf durch einen Teilluftstrom aus dem Klimakasten ins Freie geleitet werden.

In **Fig. 8** ist schematisch in einer Prinzipskizze eine *erfindungsgemäße* integrierte Wärmpumpenanlage dargestellt, die beim Heizen mit einer 2-stufigen Expansion arbeitet. Die eigentliche Wärmeaufnahme des Kältekreislaufes beim Heizen erfolgt aus der Außenluft.

Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 13 auf den Betriebsmodus Heizen geschaltet, gibt das Kältemittel die Wärme über einen Kältemittel-/Motorkühlmittel - Wärmetauscher (27)an das Motorkühlmittel ab. Nach Passieren des Rückschlagventil (10) gelangt das Kältemittel in das erste Expansionsventil (16). Nach entsprechender Drosselung und Wärmeaufnahme oder Wärmeabgabe im Verdampfer 5 strömt das Kältemittel durch den Sammler 19 und verlässt den Sammler 19 mit einer definierten Kältemittelqualität dann zur Niederdruckseite des Inneren Wärmetauschers. Das Schaltventil 21 versperrt den direkten Weg zum Verdichter, somit wird das zweite Expansionsventil 17 durchströmt , in welchem es isenthalp auf das Verdampfungsdruckniveau der Wärmeaufnahme entspannt wird. Im Kondensator/ Gaskühler 14 wird dem Kältemittel Wärme aus der Umgebung zugeführt und gegebenenfalls überhitzt. Das Kältemittel gelangt im Anschluss über das Schaltventil 21 zurück zum Verdichter 12.
Besonders vorteilhaft ist an dieser Schaltung, dass die Wärmaufnahme der Wärmepumpe aus der Außenluft erfolgt und sich somit der Motorkühlmittelkreislauf besonders rasch erwärmt, welches Vorteile bei Verbrauch, Verschleiß und Emissionen hat.

In **Fig. 9** ist schematisch in einer das Verständnis der Erfindung erleichternden Prinzipskizze eine integrierte Wärmpumpenanlage dargestellt.
Nach der Verdichtung gelangt das Kältemittel unter hohem Druck und Temperatur vor die Schaltventile 24 und 25. Ist das Ventil 24 geöffnet, gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.

Ist das Ventil 25 geschaltet, gibt das Kältemittel die Wärme an einen Gaskühler / Kondensator 20 ab. Nach Passieren des Rückschlagventil (10) gelangt das Kältemittel in das Expansionsventil 16. Nach entsprechender Drosselung und Wärmeaufnahme des Kältekreislaufes im Verdampfer 5 strömt das Kältemittel durch den Sammler 19 und verlässt den Sammler 19 mit einer definierten Kältemittelqualität über die Niederdruckseite des Inneren Wärmetauschers zum Verdichter 12.
Besonders vorteilhaft ist an dieser Schaltung, dass die Wärmaufnahme der Wärmepumpe aus dem Luftstrom der Kabinenluft erfolgt und sich somit der Motorkühlmittelkreislauf besonders rasch erwärmt, welches Vorteile bei Verbrauch, Verschleiß und Emissionen hat.
Die Heizleistung dieser Anlage ist durch die der Zuluft für die Kabine entnehmbare Wärme und der eingebrachten Verdichterleistung begrenzt.

In **Fig. 10** ist schematisch in einer das Verständnis der Erfindung erleichternden Prinzipskizze eine integrierte Wärmpumpenanlage dargestellt.
Nach der Verdichtung gelangt das Kältemittel unter hohem Druck und Temperatur vor die Schaltventile 24 und 25. Ist das Ventil 24 geöffnet, gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 25 geschaltet, gibt das Kältemittel die Wärme über einen Kältemittel-/ Motorkühlmittel - Wärmetauscher (27)an das Motorkühlmittel ab. Nach Passieren des Rückschlagventil (10) gelangt das Kältemittel in das Expansionsventil 16. Nach entsprechender Drosselung und Wärmeaufnahme des Kältekreislaufes im Verdampfer 5 strömt das Kältemittel durch den Sammler 19 und verlässt den Sammler 19 mit einer definierten Kältemittelqualität über die Niederdruckseite des Inneren Wärmetauschers zum Verdichter 12.
Besonders vorteilhaft ist an dieser Schaltung, dass die Wärmaufnahme der Wärmepumpe aus dem Luftstrom der Kabinenluft erfolgt und die Energie in den Motorkühlmittelkreislauf eingebracht wird.
Ein weiterer Nutzen entsteht im Betriebsfall Kühlen. Bei einem Start mit einem aufgeheizten Fahrzeuginnenraum können für kurze Zeit sehr große Wärmeströme in das Motorkühlmittel abgegeben werden. Hierdurch wird eine große Kälteleistung bereitgestellt. Diese Schaltung ist immer dann sinnvoll, wenn die Motorkühlmitteltemperatur weniger als 40°C beträgt. Dadurch erwärmt sich der Antriebsmotor vorteilhaft.

**Fig.11** zeigt die Schaltung aus Fig.7 mit dem Unterschied daß Umschaltventil 13 durch zwei Absperrventile 24 und 25 ersetzt wurde. So können nach einem Start mit einem im Innenraum aufgeheizten Fahrzeug für kurze Zeit sehr große Wärmeströme in das Motorkühlmittel abgegeben werden.

Hierdurch wird eine große Kälteleistung bereitgestellt.
Diese Schaltung ist immer dann sinnvoll, wenn die Motorkühlmitteltemperatur weniger als 40°C beträgt. Dadurch erwärmt sich der Antriebsmotor vorteilhaft.

**Fig. 12** zeigt schematisch in einer Prinzipskizze eine *erfindungsgemäße* integrierte Wärmepumpenanlage.
Nach der Verdichtung gelangt das Kältemittel unter hohem Druck und Temperatur vor die Schaltventile 24 und 25. Ist das Ventil 24 geöffnet, gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Im Verdampfer 5 nimmt es Wärme vom Luftstrom für die Fahrzeugkabine, welcher dadurch gekühlt wird. Das zweite Expansionsventil (17) ist nicht geschaltet und damit geschlossen. Das Kältemittel strömt über das geöffnete Ventil (26) in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.

Ist das Ventil 25 geschaltet, gibt das Kältemittel die Wärme an einen Gaskühler / Kondensator 20 ab. Nach Passieren des Rückschlagventil (10) gelangt das Kältemittel in das Expansionsventil 16. Nach entsprechender Drosselung und Wärmeaufnahme oder Wärmeabgabe im Verdampfer 5 strömt das Kältemittel durch das zweite Expansionsventil 17, in welchem es isenthalp auf das Verdampfungsdruckniveau der Wärmeaufnahme entspannt wird. Dabei ist Ventil 26 geschlossen. Im Kältemittel-/Wärmeträgerfluid-Wärmetauscher 18 wird dem Kältemittel Wärme aus dem Motorkühlmittel zugeführt und gegebenenfalls überhitzt und gelangt zurück zum Verdichter 12. Der Sammler 19 und die Niederdruckseite des Inneren Wärmetauschers 15 werden nicht vom umlaufenden Kältemittel durchströmt und stehen mit dem Verdichtereintritt in Verbindung.

Bei dieser Schaltung im Heizbetrieb wird der Sammler und die Niederdruckseite des inneren Wärmetauschers nicht vom umlaufenden Kältemittel durchströmt. Da normalerweise aufgrund der Betriebscharakteristik des Sammlers immer etwas flüssiges Kältemittel ausgetragen wird, führt dies in Folge zur geringen Überhitzung am Verdichtereintritt welches dann sich in niedrigeren Verdichteraustrittstemperaturen niederschlägt. Damit wird nicht die maximale Leistungsfähigkeit der Wärmpumpe normalerweise nicht erreicht. Des weiteren ist der auftretende Druckabfall auf der Saugseite deutlich geringer. Da diese Schaltung diese Merkmale nicht aufweist, handelt es sich um eine vorteilhafte Anwendung.

**Fig. 13** zeigt schematisch in einer Prinzipskizze eine erfindungsgemäße integrierte Wärmpumpenanlage, die beim Heizen mit einer 2-stufigen Expansion arbeitet.
Nach der Verdichtung gelangt das Kältemittel unter hohem Druck und Temperatur vor die Schaltventile 24 und 25. Ist das Ventil 24 geöffnet, gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Der Betriebspunkt befindet sich im 2-Phasen-Gebiet. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 25 geschaltet, gibt das Kältemittel die Wärme an einen Gaskühler / Kondensator 20 an den Luftstrom für die Fahrzeugkabine ab. Nach Passieren des Rückschlagventil (10) gelangt das Kältemittel in das erste Expansionsventil (16). Nach entsprechender Drosselung und Wärmeaufnahme oder Wärmeabgabe im Verdampfer 5 strömt das Kältemittel durch das zweite Expansionsventil 17 , in welchem es isenthalp auf das Verdampfungsdruckniveau der Wärmeaufnahme entspannt wird. Das Schaltventil 26 versperrt den Weg zum Sammler 19. Im Kondensator/ Gaskühler 14 wird dem Kältemittel Wärme aus der Umgebung zugeführt und gegebenenfalls überhitzt. Das Kältemittel gelangt im Anschluss über das Schaltventil 21 zurück zum Verdichter 12

Besonders vorteilhaft ist an dieser Schaltung, dass der Motorkühlmittelkreislauf während der Aufwärmung des Fahrzeuges nicht zur Heizung der Kabine herangezogen wird. Zur Wärmeaufnahme wird ein im Kältekreislauf vorhandener Wärmetauscher genutzt. Damit erwärmt sich der Antriebsmotor zügig, welches Verbrauch, Verschleiß und Emissionen gering hält.

**Fig. 14** zeigt schematisch in einer Prinzipskizze eine erfindungsgemäße integrierte Wärmepumpenanlage.
Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Das zweite Expansionsventil (17) ist nicht geschaltet und damit geschlossen. Das Kältemittel strömt über das geöffnete Ventil (26) in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.

Ist das Ventil 13 auf den Betriebsmodus Heizen geschaltet, gibt das Kältemittel die Wärme über Gaskühler/ Kondensator 20 an den Luftstrom für die Fahrzeugkabine ab. Nach Passieren des Rückschlagventil 10 gelangt das Kältemittel an den Eintritt der Hochdruckseite des Inneren Wärmetauschers 15 und in Folge in das erste Expansionsventil 16. Durch das Rückschlagventil 6 wird ein Nachströmen des Kältemittels in den Gaskühler 14 verhindert, in welchem Wärme an die Umgebung abgeführt werden kann und das enthaltene Kältemittel kondensiert. Hierbei nimmt das spezifische Volumen zu, was zum Nachströmen des Kältemittels aus dem Kreislauf führt. Der Gaskühler füllt sich dadurch mit flüssigem Kältemittel. Nach entsprechender Drosselung und Wärmeaufnahme oder Wärmeabgabe im Verdampfer 5 strömt das Kältemittel durch das zweite Expansionsventil 17, in welchem es isenthalp auf das Verdampfungsdruckniveau der Wärmeaufnahme entspannt wird. Dabei ist Ventil 26 geschlossen. Im Kältemittel-/Wärmeträgerfluid-Wärmetauscher 18 wird dem Kältemittel Wärme aus dem Motorkühlmittel zugeführt und gegebenenfalls überhitzt. Das Kältemittel durchströmt den Sammler 19, die Niederdruckseite des Inneren Wärmetauschers 15 und gelangt zum Verdichter 12.
Bei dieser Schaltung wird die im Kältemittel verbliebene Energie zur Überhitzung des Kältemittels vor Eintritt in den Verdichter 12 mittels des Inneren Wärmetauschers 15 verwendet. Da hier ein Teil der Energie im Kreislauf verbleibt, damit die Sauggastemperaturen im Verdichter 12 hoch sind, werden hohe Verdichteraustrittstemperaturen erreicht. Damit steht die Wärme bei hoher Temperatur bereit.

In **Fig. 15** ist schematisch in einer Prinzipskizze eine erfindungsgemäße integrierte Wärmpumpenanlage dargestellt, die beim Heizen mit einer 2-stufigen Expansion arbeitet. Die eigentliche Wärmeaufnahme des Kältekreislaufes beim Heizen erfolgt aus der Außenluft.

Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Im Verdampfer 5 nimmt es Wärme vom Luftstrom für die Fahrzeugkabine, welcher dadurch gekühlt wird. Das Kältemittel strömt in den Sammler (19). Auf der Niederdruckseite des Inneren Wärmetauscher (15) wird das Kältemittel überhitzt und anschließend vom Verdichter (12) angesaugt. Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.
Ist das Ventil 13 auf den Betriebsmodus Heizen geschaltet, gibt das Kältemittel die Wärme über einen Kältemittel-/Motorkühlmittel - Wärmetauscher (27)an das Motorkühlmittel ab. Nach Passieren des Rückschlagventil 10 gelangt das Kältemittel an den Eintritt der Hochdruckseite des Inneren Wärmetauschers 15 und in Folge in das erste Expansionsventil 16. Durch das Rückschlagventil 6 wird ein Nachströmen des Kältemittels in den Gaskühler 14 verhindert. Nach entsprechender Drosselung und Wärmeaufnahme oder Wärmeabgabe im Verdampfer 5 strömt das Kältemittel durch den Sammler 19 zur Niederdruckseite des Inneren Wärmetauschers 15. Das Schaltventil 21 versperrt den direkten Weg zum Verdichter, somit wird das zweite Expansionsventil 17 durchströmt , in welchem es isenthalp auf das Verdampfungsdruckniveau der Wärmeaufnahme entspannt wird. Im Kondensator/ Gaskühler 14 wird dem Kältemittel Wärme aus der Umgebung zugeführt und gegebenenfalls überhitzt. Das Kältemittel gelangt im Anschluss über das Schaltventil 21 zurück zum Verdichter 12.

**Fig. 16** zeigt schematisch in einer Prinzipskizze eine erfindungsgemäße integrierte Wärmepumpenanlage.
Nach der Verdichtung gelangt das Kältemittel unter hohem Druck und Temperatur in das Schaltventil 13. Hier wird der Betriebsmodus Kühlen oder Heizen geschaltet. Ist das Ventil 13 auf den Betriebsmodus Kühlen geschaltet gibt das Kältemittel über den Gaskühler (14) Wärme an die Umgebung ab und wird im Hochdruckteil des Inneren Wärmetauscher (15) weiter enthitzt. Nach Passieren des Rückschlagventil (6) wird das Kältemittel im ersten Expansionsventil (16) auf Verdampfungsdruck entspannt. Das zweite Expansionsventil (17) ist nicht geschaltet und damit geschlossen. Das Kältemittel strömt über das geöffnete Ventil (26) in den Sammler (19). Auf der Niederdruckseite des Inneren Wärmetauscher (15) wird das Kältemittel überhitzt und anschließend vom Verdichter (12) angesaugt.
Durch das Schalten des Umschaltventils 30 in den Betriebsmodus Kühlen kann bei Stellung des Ventils 13 auf Heizen gekühlt werden. Das Kältemittel gibt einen Teil die Wärme über einen Kältemittel-/ Motorkühlmittel - Wärmetauscher 27 an das Motorkühlmittel ab und strömt dann durch Umschaltventil 30 durch das Rückschlagventil 10 in den Gaskühler 14. Hier gibt es weitere Wärme an die Umgebung ab und wird im Hochdruckteil des Inneren Wärmetauscher 15 weiter enthitzt. Nach Passieren des Rückschlagventil 6 wird das Kältemittel im ersten Expansionsventil 16 auf Verdampfungsdruck entspannt. Das zweite Expansionsventil 17 ist nicht geschaltet und damit geschlossen. Das Kältemittel strömt über das geöffnete Ventil 26 in den Sammler 19. Auf der Niederdruckseite des Inneren Wärmetauscher 15 wird das Kältemittel überhitzt und anschließend vom Verdichter 12 angesaugt.
Im Klimakasten wird der Luftstrom für die Kabine abgekühlt, die enthaltene Luftfeuchtigkeit kondensiert an den kalten Oberflächen der Wärmetauscher. Im Bedarfsfall wird die Luft mittels des Heizungswärmetauschers 7 entsprechend erwärmt.

Ist das Ventil 13 auf den Betriebsmodus Heizen geschaltet, gibt das Kältemittel die Wärme über einen Kältemittel-/Motorkühlmittel - Wärmetauscher (27) an das Motorkühlmittel ab. Im Umschaltventil 30 in der Stellung für den Betriebsmodus Heizen gelangt das Kältemittel an den Eintritt der Hochdruckseite des Inneren Wärmetauschers 15 und in Folge in das erste Expansionsventil 16. Durch das Rückschlagventil 6 wird ein Nachströmen des Kältemittels in den Gaskühler 14 verhindert, in welchem Wärme an die Umgebung abgeführt werden kann und das enthaltene Kältemittel kondensiert. Hierbei nimmt das spezifische Volumen zu, was zum Nachströmen des Kältemittels aus dem Kreislauf führt. Der Gaskühler füllt sich dadurch mit flüssigem Kältemittel. Nach entsprechender Drosselung und Wärmeaufnahme oder Wärmeabgabe im Verdampfer 5 strömt das Kältemittel durch das zweite Expansionsventil 17, in welchem es isenthalp auf das Verdampfungsdruckniveau der Wärmeaufnahme entspannt wird. Dabei ist Ventil 26 geschlossen. Im Kältemittel-/Wärmeträgerfluid-Wärmetauscher 18 wird dem Kältemittel Wärme aus dem Motorkühlmittel zugeführt und gegebenenfalls überhitzt. Das Kältemittel durchströmt den Sammler 19, die Niederdruckseite des Inneren Wärmetauschers 15 und gelangt zum Verdichter 12. Bei dieser Schaltung wird die im Kältemittel nach der Verdichtung enthaltene Energie in das Motorkühlmittel eingebracht, welches sich somit nach Fahrtbeginn schnell erwärmt. Dadurch ergeben sich Vorteile bei Verschleiß, Verbrauch und Emission. Ferner steht für den Kühlbetrieb zu Anfang eine große Wärmesenke bereit welche das Ansprechen der Kälteanlage zu Beginn verbessert. Daneben ergeben sich für den Betrieb der Kälteanlage weitere Vorteile. Die Wärmeabgabe erfolgt nicht nur im Gaskühler sondern auch über den Motorkühler. Dies erlaubt eine effizientere Wärmeabfuhr. Des weiteren ist die Eintrittstemperatur des Kältemittels in den Gaskühler deutlich reduziert. Die Temperatur liegt damit unter 100°C, was aus Gründen der Festigkeit der in Wärmetauschern üblicherweise verwendeten Aluminiummaterialien einen großen Vorteil darstellt.

**Fig. 17** zeigt schematisch in einer Prinzipskizze eine erfindungsgemäß integrierte Wärmepumpenanlage, die im Heizmodus eine 2-stufige Expansion ermöglicht, die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und bei Wärmepumpenbetrieb die Wärme aus der Luft aufnimmt.

**Fig. 18** zeigt schematisch in einer Prinzipskizze eine erfindungsgemäße integrierte Wärmepumpenanlage, die im Heizmodus eine 2-stufige Expansion ermöglicht, die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und bei Wärmepumpenbetrieb die Wärme aus der Luft aufnimmt.

**Fig. 19** zeigt schematisch in einer das Verständnis der Erfindung erleichternden Prinzipskizze eine integrierte Wärmepumpenanlage, die im Heizmodus die Wärme indirekt mittels einer ersten Wärmeträgerflüssigkeit überträgt, die Wärme zum Kühlen oder zum Heizen der Luft indirekt mittels einer zweiten Wärmeträgerflüssigkeit überträgt und bei welcher beim Kühlen die Wärme aus dem Kreislauf an die erste Wärmeträgerflüssigkeit und/oder an die Außenluft übertragbar ist.

**Fig. 20** zeigt schematisch in einer Prinzipskizze eine erfindungsgemäße integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt.

**Fig. 21** zeigt schematisch in einer Prinzipskizze eine erfindungsgemäße integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt und die Verschaltung des Kühlmittelkreises darstellt.

**Fig. 22** zeigt schematisch in einer Prinzipskizze eine erfindungsgemäβe integrierte Wärmepumpenanlage, die Wärme zum Kühlen oder zum Heizen der Luft indirekt in den Kühlmittelkreislauf des Antriebsmotors oder indirekt in ein abgeschlossenes Teilsystem des Kühlmittelkreislaufes überträgt und bei Wärmepumpenbetrieb die Wärme aus der Luft aufnimmt und die Verschaltung des Kühlmittelkreises in einer Ventileinheit darstellt.

## Patentansprüche

1. Wärmepumpensystem für ein Kraftfahrzeug,
- bei dem über einen ersten Wärmetauscher (20) eines Kältemittelkreislaufs die Zuluft zum Innenraum des Kraftfahrzuges beheizbar ist,
- über eine erste Expansionseinrichtung (16) das Kältemittel von einem höheren auf ein geeignetes Zwischendruckniveau entspannbar ist und
- bei dem über einen zweiten Wärmetauscher (18) Wärme aus einer Wärmequelle aufnehmbar ist,
**dadurch gekennzeichnet, daß**
- über einen dritten Wärmetauscher (5) auf dem Zwischendruckniveau Wärme vom oder zum Kältemittel übertragbar ist, wobei
- über eine zweite Expansionseinrichtung (17) das Kältemittel vom Zwischendruckniveau aus entspannbar ist.

2. Wärmepumpensystem nach Anspruch 1,
**dadurch gekennzeichnet, daß**
- mit Hilfe der auf dem Zwischendruckniveau an den Kältemittelkreislauf zugeführten Wärme der Innenraumzuluftstrom getrocknet wird.

3. Wärmepumpensystem nach Anspruch 1 oder 2,
**dadurch gekennzeichnet, daß**
- ein Druckniveau des dritten Wärmetauschers (5) über eine korrespondierende Ansteuerung der ersten (16) und zweiten Expansionseinrichtung (16) einstellbar ist.

4. Wärmepumpensystem nach Anspruch 3,
**dadurch gekennzeichnet, daß**
- die installierte Wärmeübertragungsleistung von erstem (20) und drittem Wärmetauscher (5) der maximalen Zuheizleistung des Wärmepumpensystems an die Inneraumzuluft entspricht.

5. Wärmepumpensystem nach Anspruch 3 oder 4,
**dadurch gekennzeichnet, daß**
- der erste (20) und/oder der dritte Wärmetauscher (5) als Kältemittel-/Wärmeträgerflüssigkeitswärmetauscher (27, 3) ausgebildet sind, wobei
- eine Wärmeträgerflüssigkeit in einem zweiten Kreislauf geführt ist, über den
- Wärme vom Kältemittelkreislauf zum Innenraumzuluftstrom übertragbar ist.

## Claims

1. Heat pump system for a motor vehicle,
- in which the air delivered to the inside space of the motor vehicle can be warmed by a first heat exchanger (20) of a refrigerant circuit,
- The refrigerant can be decompressed by a first expansion device (16) from a higher, to a suitable intermediate pressure level, and
- in which heat can be drawn from a heat source by a second heat exchanger (18),
**characterised in that**
- heat can be transferred from or to the refrigerant by a third heat exchanger (5) at the intermediate pressure level, and
- the refrigerant can be decompressed from the intermediate pressure level by a second expansion device (17).

2. Heat pump system according to Claim 1,
**characterised in that**
- the air stream delivered to the inside space is dried with the help of the heat transferred into the refrigerant circuit at the intermediate pressure level.

3. Heat pump system according to Claims 1 or 2,
**characterised in that**
- a pressure level of the third heat exchanger (5) can be adjusted by appropriate control of the first and second expansion devices.

4. Heat pump system according to Claim 3,
**characterised in that**
- the installed heat transfer power of the first (20) and third (5) heat exchangers corresponds to the maximum heat input power of the heat pump system to the inside space air.

5. Heat pump system according to Claims 3 or 4,
**characterised in that**
- the first (20) and/or the third (5) heat exchangers are made as refrigerant/heat carrier liquid heat exchangers, and
- a heat carrier liquid is passed around a second circuit, by means of which
- heat from the refrigerant circuit can be transferred to the flow of air entering the inside space of the vehicle.

## Revendications

1. Système de pompe à chaleur pour un véhicule,
◆ dans le cadre duquel un premier échangeur de chaleur (20) d'un circuit d'agent réfrigérant permet de chauffer l'air frais entrant dans l'habitacle du véhicule,
◆ un premier dispositif à expansion (16) permet de détendre l'agent réfrigérant d'un niveau de pression intermédiaire supérieur à un niveau de pression intermédiaire approprié et
◆ dans le cadre duquel un deuxième échangeur de chaleur (18) permet de capter de la chaleur à partir d'une source de chaleur,
**caractérisé en ce,**
◆ **qu'**un troisième échangeur de chaleur (5) permet de transférer de la chaleur au niveau de pression intermédiaire depuis ou vers l'agent réfrigérant,
◆ un deuxième dispositif à expansion (17) permet de détendre l'agent réfrigérant à partir du niveau de pression intermédiaire.

2. Système de pompe à chaleur selon la revendication 1, **caractérisé en ce que** le courant d'air frais intérieur est séché à l'aide de la chaleur amenée au circuit d'agent réfrigérant au niveau de pression intermédiaire.

3. Système de pompe à chaleur selon la revendication 1 ou 2, **caractérisé en ce qu'**un niveau de pression du troisième échangeur de chaleur (5) peut être réglé par une commande correspondante du premier (16) et du deuxième dispositif à expansion (16)

4. Système de pompe à chaleur selon la revendication 3, **caractérisé en ce que** la capacité installée de transfert de chaleur depuis le premier (20) et le troisième échangeur de chaleur (5) correspond à la puissance calorifique maximale du système de pompe à chaleur amenée à l'air frais intérieur.

5. Dispositif de pompe à chaleur selon la revendication 3 ou 4, **caractérisé en ce que**, le premier (20) et/ou le troisième échangeur de chaleur (5) sont réalisés comme des échangeurs de chaleur à fluide caloporteur/agent réfrigérant (27, 3), dans lesquels:
◆ un fluide caloporteur est amené dans un deuxième circuit, via lequel
◆ de la chaleur peut être transférée du circuit d'agent réfrigérant au courant d'air frais intérieur.
